# EUROPEAN PATENT SPECIFICATION

(11) **EP 4 662 532 B1**
(45) Date of publication and mention of the grant of the patent: **11.11.2026**
(21) Application number: 24841519.2
(22) Date of filing: 13.12.2024
(51) Int. Cl.: G05B 13/02, G05B 13/04, G05B 15/02

(54) **CONTROL UNDER UNCERTAINTY USING CONSTRAINED ZONOTOPES**
KONTROLLE UNTER UNSICHERHEIT UNTER VERWENDUNG EINGESCHRÄNKTER ZONOTOPES
COMMANDE SOUS INCERTITUDE À L'AIDE DE ZONOTOPES CONTRAINTS

(30) Priority: 29.02.2024 US 202418591583
(43) Date of publication of application: 17.12.2025
(73) Proprietor: Mitsubishi Electric Corporation, Tokyo 1008310 (JP)
(72) Inventor: VINOD, Abraham, Cambridge, Massachusetts 02139-1955 (US); WEISS, Avishai, Cambridge, Massachusetts 02139-1955 (US); DI CAIRANO, Stefano, Cambridge, Massachusetts 02139-1955 (US)
(74) Representative: Pfenning, Meinig & Partner mbB
(86) International application number: PCT/JP2024/080230
(87) International publication number: WO 2025/182292

(56) References cited:
- US-A1- 2023 182 927
- RAGHURAMAN VIGNESH ET AL: "Tube-based robust MPC with adjustable uncertainty sets using zonotopes*", 2021 AMERICAN CONTROL CONFERENCE (ACC), AMERICAN AUTOMATIC CONTROL COUNCIL, 25 May 2021 (2021-05-25), pages 462 - 469, XP033945693, DOI: 10.23919/ACC50511.2021.9483262
- YANG LIREN ET AL: "Scalable Zonotopic Under-Approximation of Backward Reachable Sets for Uncertain Linear Systems", IEEE CONTROL SYSTEMS LETTERS, IEEE, vol. 6, 26 October 2021 (2021-10-26), pages 1555 - 1560, XP011886956, DOI: 10.1109/LCSYS.2021.3123228
- VINOD ABRAHAM P ET AL: "Abort-safe spacecraft rendezvous under stochastic actuation and navigation uncertainty", 2021 60TH IEEE CONFERENCE ON DECISION AND CONTROL (CDC), IEEE, 14 December 2021 (2021-12-14), pages 6620 - 6625, XP034074061, DOI: 10.1109/CDC45484.2021.9683322
- JOSEPH K. SCOTT ET AL: "Constrained zonotopes: A new tool for set-based estimation and fault detection", AUTOMATICA, vol. 69, 1 July 2016 (2016-07-01), AMSTERDAM, NL, pages 126 - 136, XP055640586, ISSN: 0005-1098, DOI: 10.1016/j.automatica.2016.02.036
- ZHENG HAO ET AL: "Varying Zonotopic tube RMPC with switching logic for lateral path tracking of autonomous vehicle", JOURNAL OF THE FRANKLIN INSTITUTE, PERGAMON PRESS, ELMSFOR, NY, US, vol. 359, no. 7, 14 March 2022 (2022-03-14), pages 2759 - 2787, XP087028473, ISSN: 0016-0032, [retrieved on 20220314], DOI: 10.1016/J.JFRANKLIN.2022.03.011
- ALTHOFF MATTHIAS: "On Computing the Minkowski Difference of Zonotopes</mark>", ARXIV.ORG, 23 August 2022 (2022-08-23), pages 1 - 23, XP093262790, Retrieved from the Internet <URL:https://arxiv.org/pdf/1512.02794>

## Description

### [Technical Field]

The disclosure relates generally to control applications, and more particularly to a control system and a method for feedback control applications employing robust controllable sets.

### [Background Art]

Robust controllable (RC) sets, also known as robust backward reach sets, characterize a set of states from which a collection of possibly time-varying state constraints can be satisfied by a controlled state trajectory, under bounded control authority and bounded uncertainty. RC sets are used for robust model predictive control, fault-tolerant control, and verification of dynamical systems in a broad range of applications in space, transportation, and robotics. For discrete-time linear systems with additive uncertainty and bounded, polytopic state and input constraints, exact RC sets are polytopes, and the RC sets may be computed using set manipulations of polytopes. Polytopes are convex geometric shapes, and their manipulations have been well-studied in the literature. However, polytope-based RC set computation involves a projection that can be accomplished via vertex-facet enumeration, Fourier-Motzkin elimination, or multi-parametric optimization. These operations are either computationally prohibitive or cause numerical issues for high-dimensional system models arising from complex systems and/or in applications involving long safety horizons.

The RC sets can be computed using set operations defined in the field of computational geometry. Specifically, the robust controllable sets can be obtained via a set recursion involving set operations like intersection, affine transformation, Minowski sum, and Pontryagin difference. Since several control applications involve linear dynamics and convex, polyhedral state constraints (characterized by a collection of linear constraints on the state), one can use polyhedral computational geometry to implement these recursions. In such an approach, it is possible to represent the state constraint sets as polyhedra, and then compute the robust controllable set by performing the above-listed set operations on polyhedra, for which there are well-known set computation algorithms. However, given one or more bounded polyhedra characterized by linear constraints, the Minkowski sum operation requires solving a vertex-facet enumeration problem, which is NP-hard. Consequently, existing approaches using polyhedral computational geometry suffer from numerical issues when used in high dimensions, and are limited to low-dimensional systems.

Raghuraman Vignesh, et al.: "Tube-based robust MPC with adjustable uncertainty sets using zonotopes*", 2021 AMERICAN CONTROL CONFERENCE (ACC); 25 MAY 2021, pages 462-469, tube-based, robust model predictive control with adjustable uncertainty sets using zonotopes.

Therefore, there is still a need to compute RC sets in a computationally efficient manner suitable for online control applications.

### [Summary of Invention]

It is an object of some embodiments to provide, according to the independent claims, a system and a control system and a method for feedback control applications including set-based constrained control and fault-tolerant control applications, employing robust and/or stochastic controllable sets using constrained zonotopes. Examples of such applications include control and space applications.

Robust controllable sets can be defined for a dynamical system with some bounded control authority subject to uncertainty lying in a bounded set. Here, the robust controllable sets characterize a set of states at the current time that, despite the uncertainty, can be steered to stay within a pre-determined sequence of state constraints over the next time steps. The robust controllable sets can be used in model predictive control to impose constraints on the states over the planning horizon so that some desirable phenomenon is guaranteed to occur even in the presence of disturbances. For example, using a suitably defined robust controllable set, some embodiments can ensure that the system degrades gracefully by staying in a pre-determined set of safe sets when needed or leaving open the possibility of satisfying some secondary requirements at any point in time.

Some embodiments are based on the recognition that robust controllable sets can be computed using polyhedral computational geometry. Specifically, the robust controllable sets can be obtained via a set recursion involving set operations like intersection, affine transformation, Minkowski sum, and Pontryagin difference. However, given one or more bounded polyhedra characterized by linear constraints, the Minkowski sum operation requires solving a vertex-facet enumeration problem, which is known to be NP-hard. Consequently, existing approaches using polyhedral computational geometry suffer from numerical issues when used in high dimensions, and are limited to low-dimensional systems.

Some embodiments are based on recognizing that constrained zonotopes provide an alternative representation of bounded polyhedrons (also called polytopes). A constrained zonotopic representation of a polytope characterizes the polytope as an affine transformation (projection) of the intersection of a unit hyper-cube in a high-dimensional space and an affine set. Affine sets are solution sets to some collection of linear equations. Constrained zonotopes provide closed-form, easy-to-evaluate expressions to compute the intersection, affine transformation, and Minkowski sum. However, no closed-form expression exists for the computation of the Pontraygin difference.

Some embodiments are based on recognizing that instead of considering the generic form of the Pontraygin difference, a computationally tractable approach for the Pontraygin difference between a constrained zonotope and a centrally symmetric, convex, and compact set is what is needed for many practical control applications. In addition, for these types of control applications, the Pontraygin difference can be inner- or outer-approximated with closed-form expressions.

Centrally symmetric sets satisfy the property that, for every point in the set, its reflection about a pre-determined point also belongs to the set. Convex sets satisfy the property that every line segment joining two points in the set is completely contained in the set. Compact sets are sets that are closed (including the boundary) and bounded. Examples of centrally symmetric, convex, and compact sets include zonotopes, ellipsoids, and convex union of intervals. An example of a control application with ellipsoidal uncertainty is the computation of RC set when the energy of the uncertainty is known to be bounded, in which case the uncertainty lies in an ellipsoid.

Various embodiments address the uncertainty of the control in a computationally efficient manner by inner- and outer-approximating the Pontryagin difference between a constrained zonotope and a centrally symmetric set. For example, some embodiments compute the inner approximation to the Pontryagin difference by performing a specific scaling of the coordinate system in the high-dimensional space characterizing the constrained zonotope. The scaling that can guarantee an inner approximation has a closed form via a solution of a least-squares problem that utilizes the parameters characterizing the minuend (constrained zonotope) and the subtrahend (the centrally symmetric, convex, and compact set). Consequently, an inner approximation of the Pontryagin difference can be computed efficiently and accommodates sets defined in very large dimensional spaces as well.

In addition, some implementations determine the choice of scaling that coincides with the computationally expensive operation of lifting the subtrahend to the high-dimensional space associated with the constrained zonotope, performing the Pontryagin difference in the high-dimensional space, and then projecting it back to the low-dimensional space in which the subtrahend was originally defined.

Additionally or alternatively, some embodiments perform the outer approximation to the Pontryagin difference by computing a convex polyhedron that is guaranteed to contain the constrained zonotope. The description of the polyhedron is also available in closed form using convex optimization duality and least squares. The outer-approximation can be then determined by computing the Pontryagin difference between the polyhedral outer-approximation and the subtrahend.

Using the proposed inner and outer-approximation to the Pontryagin difference, some embodiments inner- and outer-approximate the robust controllable set for high-dimensional linear systems with polyhedral state constraints, polytopic input sets, and centrally symmetric, convex, and compact uncertainty sets. An inner approximation of the robust controllable set provides a sufficient condition for a state to lie in the robust controllable set. The outer approximation helps in quantifying the amount of conservativeness in the inner approximation.

In other words, some embodiments are based on recognizing that (1) there is a closed-form approximation, e.g., an inner or outer approximation, of a Pontraygin difference between the constrained zonotopic representation and a transformation of the symmetric bounded set into a high-dimensional space of the constrained zonotopic representations, (2) such a closed-form approximation is sufficient, i.e., practical and/or accurate enough, for feedback control applications employing robust controllable sets; and (3) such a closed-form approximation allows to employ closed-form computational geometry for determining robust controllable sets with computational efficiency suitable for online control of various mechanical systems.

In addition, some embodiments are based on recognizing that stochastic controllable (SC) sets are defined similarly to robust controllable (RC) sets. The SC sets characterize a set of states from which a collection of possibly time-varying state constraints can be satisfied with a user-specified likelihood by a controlled state trajectory, under bounded control authority and stochastic uncertainty. The differences between SC and RC sets are twofold. First, SC sets accommodate stochastic (and possibly unbounded) uncertainty, whereas RC sets require the uncertainty to be bounded but do not require any stochastic information. Second, while RC sets guarantee absolute constraint satisfaction, SC sets provide constraint satisfaction up to a user-specified likelihood. Like RC sets, SC sets are advantageous for stochastic model predictive control, fault-tolerant control, and verification of dynamical systems, and have been used in a broad range of applications in space, transportation, and robotics.

The SC sets can be inner-approximated using appropriately defined RC sets. Consequently, the existing approaches to inner-approximate SC sets suffer from the same challenges identified above, and some embodiments of this disclosure remedy these shortcomings in the computation of SC sets by computing an inner-approximation of the SC sets using constrained zonotopes.

It is also an object of examplar embodiments to provide a system and a method for controlling the motion of a spacecraft in a multi-object celestial system while avoiding an unauthorized entry into a keep-away region during a normal and abnormal (post-failure) operation of the spacecraft. As used herein, the normal operation includes moving toward a target in the keep-away zone, and the abnormal (post-failure) operation includes one or a combination of a failure to receive authorization to enter the keep-away zone and a failure of at least one component of the spacecraft. This problem comes from the requirements of spacecraft motion and rendezvous of multiple spacecraft forming a multi-object celestial system to ensure additional safety in space collaboration. To that end, it is an object of one embodiment to control the motion of the spacecraft toward the keep-away region such that upon detecting the abnormal (post-failure) operation there is a possibility to move the spacecraft while avoiding the keep-away zone.

Some embodiments are based on a recognition that there are states of the spacecraft in the proximity of the keep-away zone that may unavoidably lead the spacecraft into the keep-away zone even if the authorization to enter is rejected based on any reason including a total or partial failure of propulsion of the spacecraft. As used herein, the state of the spacecraft includes the location of the spacecraft and at least one or a combination of a velocity and an acceleration of the spacecraft. Additionally, internal and external forces acting on the spacecraft during its motion, such as inertia and force of gravity, may change the state of the spacecraft to specific states that may lead the spacecraft into the keep-away zone, regardless of any efforts that the spacecraft may perform.

Some embodiments are based on the realization that this fault-tolerant control problem can be addressed by using a robust controllable (RC) set of values of the state of the spacecraft that the spacecraft should be within. As used herein, an RC set is determined such that when the state of the spacecraft is within a robust controllable set there is a control command produced by a control law that maintains the state of the spacecraft within a (possibly time-varying) collection of state constraints despite the controlled and uncontrolled, internal and external forces acting on the spacecraft. In such a manner, if the spacecraft is within the RC set, a control law within specified control limits exists such that the spacecraft does not enter the keep-away zone.

Some embodiments are based on recognizing that it is computationally expensive to compute the RC sets online, i.e., during real-time controlling of the spacecraft. Hence, the embodiments address this problem using a closed-form approximation, e.g., an inner or outer approximation, of a Pontraygin difference between the constrained zonotopic representation and a transformation of the symmetric bounded set into a high-dimensional space of the constrained zonotopic representations.

Some embodiments are based on recognizing that requiring the motion of the spacecraft to lie in a constrained zonotope can be enforced by a collection of linear constraints. Consequently, some embodiments utilize off-the-shelf (convex) optimization tools to enforce the condition that the spacecraft belongs to a robust controllable set, that is inner-approximated by a constrained zonotope.

Additionally or alternatively, some embodiments are based on a recognition that requiring the motion of the spacecraft to lie in a plurality of constrained zonotopes can be enforced by a collection of mixed-integer linear constraints. Consequently, some embodiments utilize off-the-shelf (mixed-integer) optimization tools to enforce the condition that the spacecraft must belong to a robust controllable set, that is inner-approximated by a constrained zonotope.

Some embodiments are based on the understanding that stochastic uncertainties may be transformed into bounded deterministic uncertainties with a predefined likelihood specifying a range of values on the stochastic uncertainties. Enforcing that the spacecraft with stochastic state lies in an SC set with high likelihood can be guaranteed if the mean state of the spacecraft lies inside the Pontryagin difference of the SC set or its inner approximation and an ellipsoid characterized by the stochasticity of the set. Consequently, some embodiments utilize convex optimization tools and the disclosed systems and methods to compute the Pontryagin difference of a constrained zonotope to enforce the condition that the spacecraft must belong to a stochastic controllable set that is inner-approximated by a constrained zonotope with a user-specified likelihood.

Accordingly, an embodiment discloses a feedback controller for controlling an operation of a mechanical system subject to uncertainty on a state of the operation of the system, the feedback controller comprising: at least one processor; and a non-transitory memory having instructions stored thereon that, when executed by the at least one processor, cause the feedback controller to: collect a feedback signal indicative of a current state of the operation of the system subject to constraints and current uncertainty on the current state of the operation of the system, wherein the current uncertainty lies in a symmetric bounded set and includes one or a combination of uncertainty on dynamics of the system, uncertainty on a state of the system, uncertainty on control commands to the system, and uncertainty on constraints on the state of the operation of the system; determine a robust controllable set for maintaining the state of the system employing closed-form expressions on a constrained zonotope defining the constraints on the state of the operation of the system and an affine transformation of the symmetric bounded set inclosing the current uncertainty into space of the constrained zonotope, wherein the closed-form expressions include a closed-form approximation of a Pontryagin difference between the constrained zonotopic representation and the zonotopic transformation of the symmetric bounded set; determine a control command for controlling the operation of the system subject to the robust controllable set; and submit the control command to an actuator of the system causing a change in the state of the operation of the system.

### [Brief Description of Drawings]

The presently disclosed embodiments will be further explained with reference to the attached drawings. The drawings shown are not necessarily to scale, with emphasis instead generally being placed upon illustrating the principles of the presently disclosed embodiments.
[FIG. 1A]

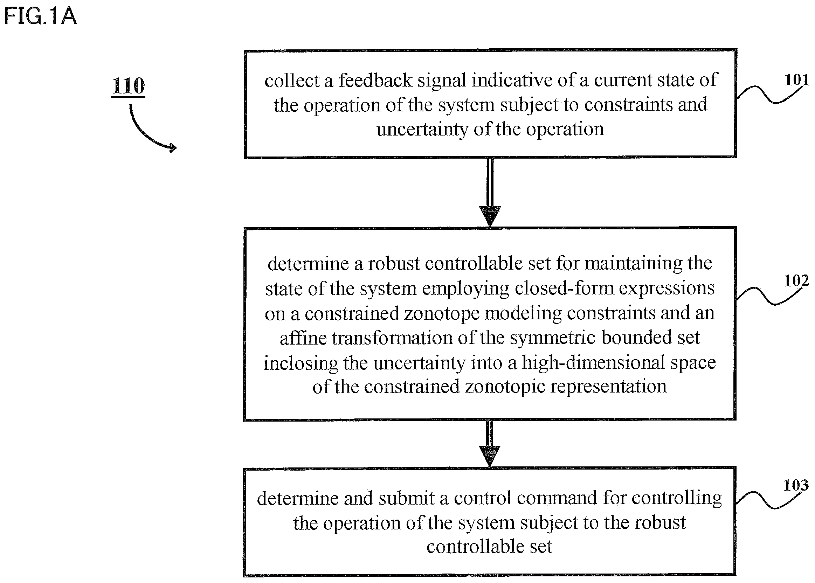

   FIG. 1A shows a block diagram of a feedback controller 110 for controlling the operation of a mechanical system subject to uncertainty on the state of the operation of the system according to some embodiments.
[FIG. 1B]

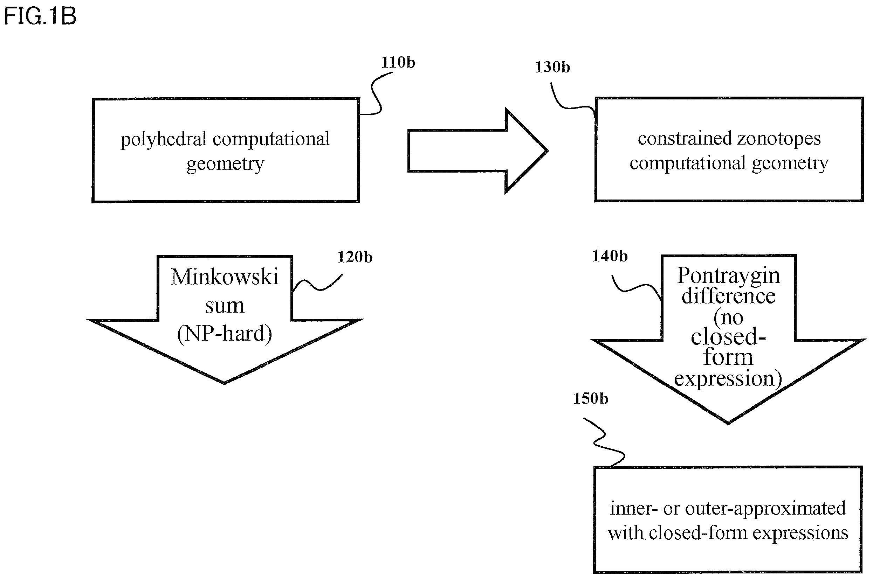

   FIG. 1B shows a schematic of some principles employed by different embodiments.
[FIG. 1C]

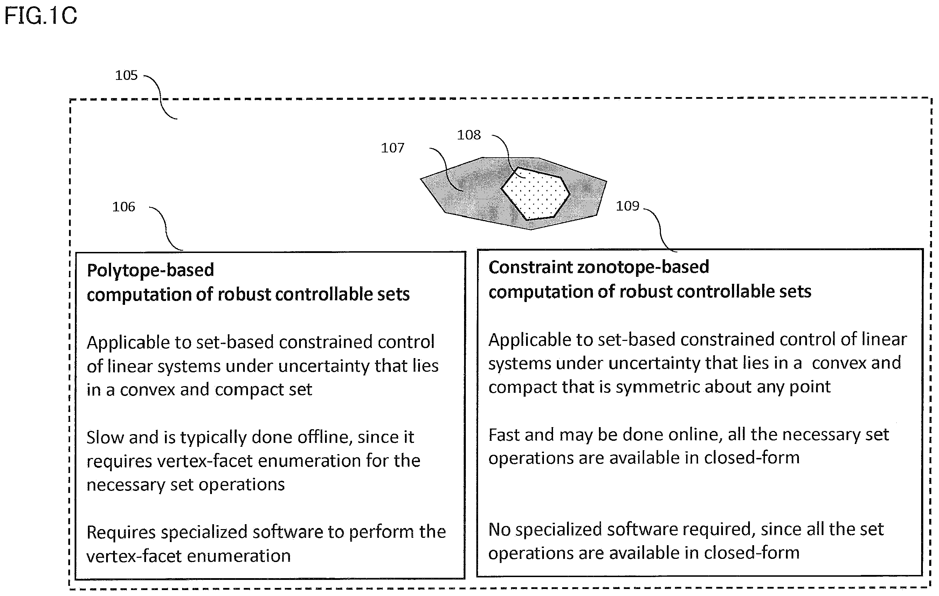

   FIG. 1C shows an illustration of the benefits of the proposed method in computing robust controllable sets using constrained zonotopes computational geometry, according to an embodiment of the present disclosure.
[FIG. 2A]

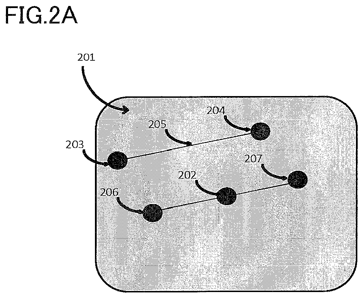

   FIG. 2A illustrates a convex and compact set that is centrally symmetric about point having properties employed by some embodiments.
[FIG. 2B]

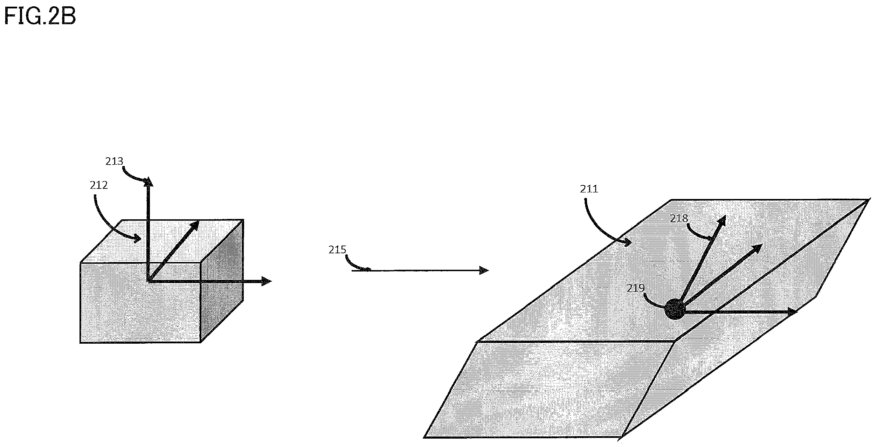

   FIG. 2B illustrates a zonotope employed by some embodiments.
[FIG. 2C]

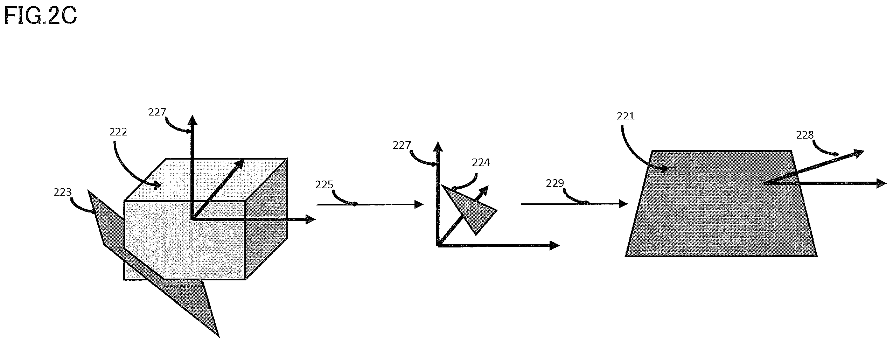

   FIG. 2C illustrates a constrained zonotope employed by some embodiments.
[FIG. 3A]

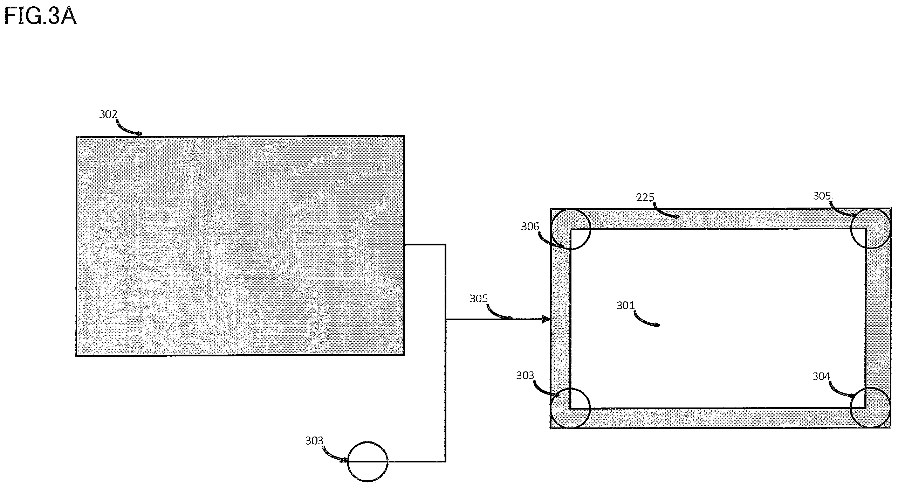

   FIG. 3A illustrates the Pontryagin difference between two sets employed by some embodiments.
[FIG. 3B]

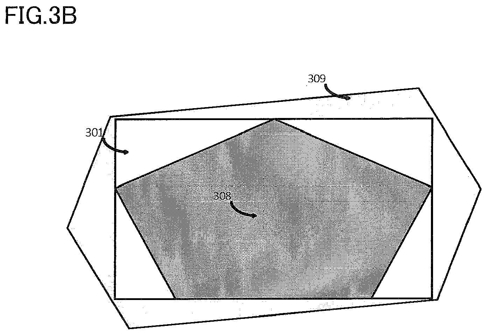

   FIG. 3B illustrates an inner-approximation and outer-approximation of the set employed by some embodiments.
[FIG. 3C]

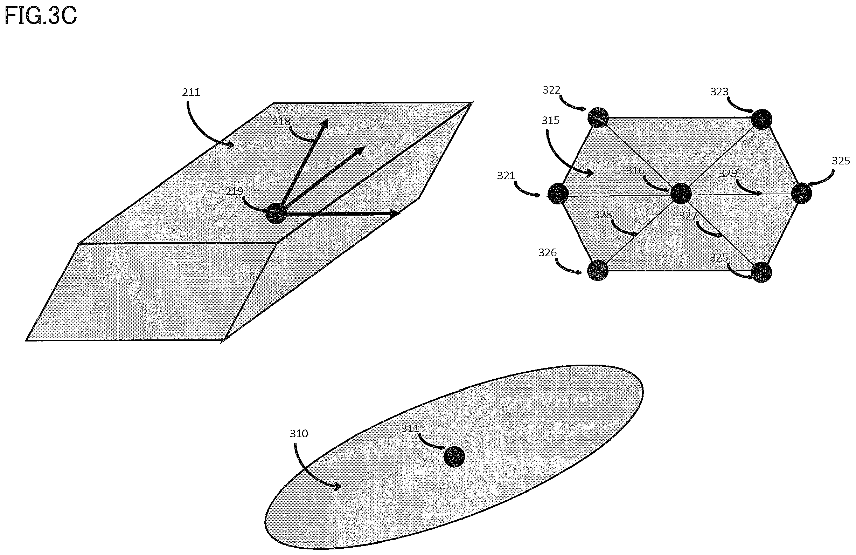

   FIG. 3C shows various examples of sets that are convex, compact, and symmetric about some point having principles employed by some embodiments.
[FIG. 3D]

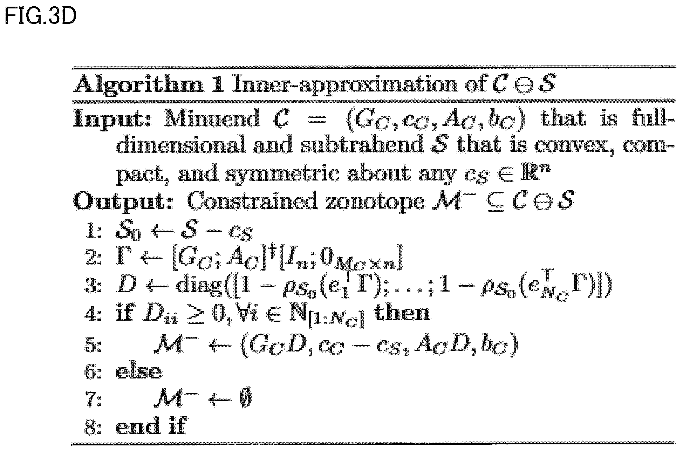

   FIG. 3D shows pseudocode of an algorithm of a method for computing an inner-approximation of the Pontryagin difference according to some embodiments.
[FIG. 3E]

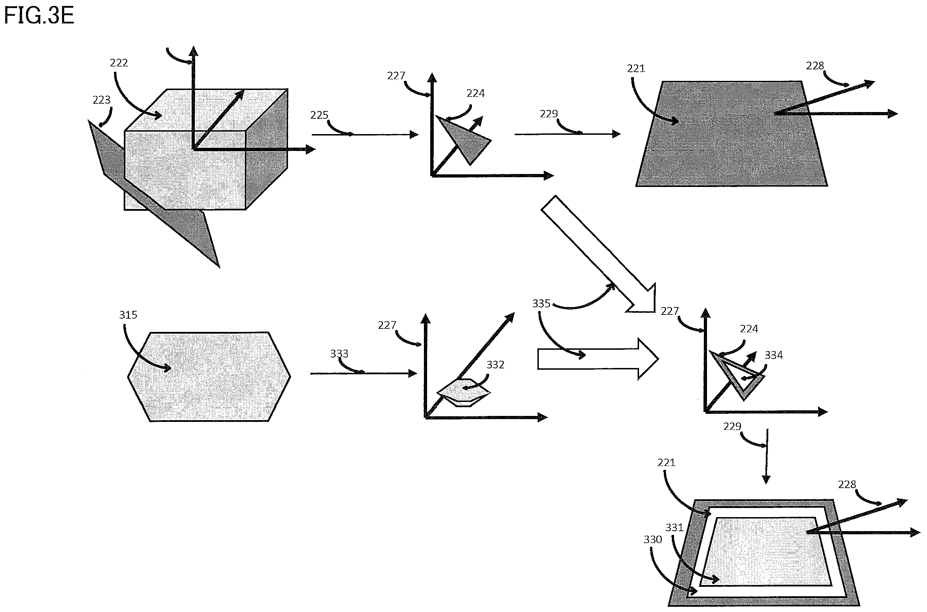

   FIG. 3E illustrates the intuition behind the algorithm described in FIG. 3D used to compute an inner-approximation of the Pontryagin difference between a constrained zonotope and a convex, compact set that is symmetric about a point.
[FIG. 4A]

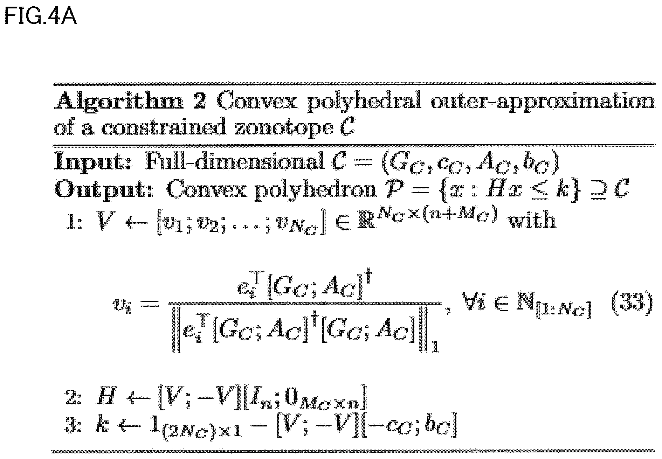

   FIG. 4A illustrates an algorithm to compute the polytopic outer-approximation of a constrained zonotope according to some embodiments.
[FIG. 4B]

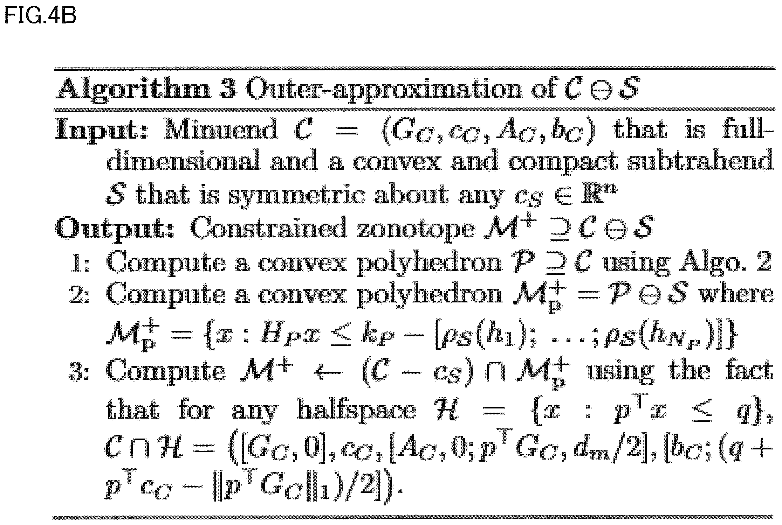

   FIG. 4B shows pseudocode of an algorithm of a method for computing a constrained zonotopic outer-approximation of the Pontryagin difference between a constrained zonotope and a convex, compact set that is symmetric about a point according to some embodiments.
[FIG. 5A]

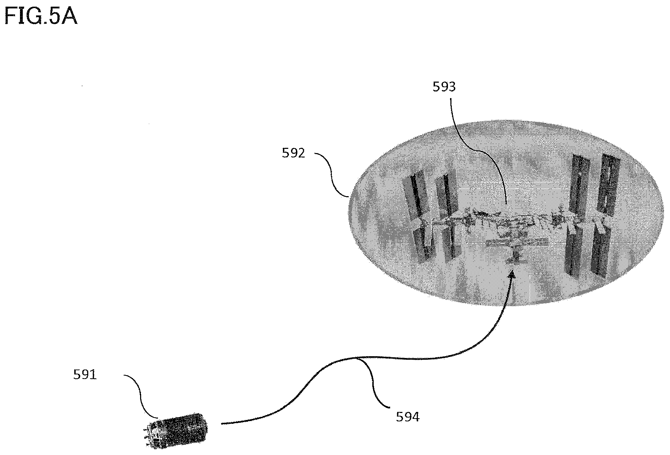

   FIG. 5A illustrates the motion of spacecraft in a multi-object celestial system, according to an embodiment of the present disclosure.
[FIG. 5B]

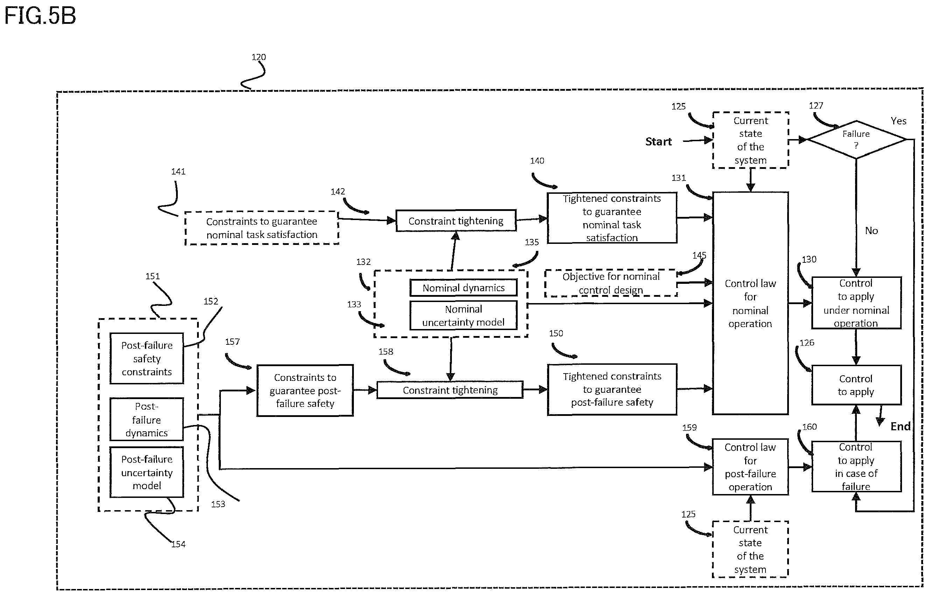

   FIG. 5B shows a block diagram of a trajectory design method for fault-tolerant applications that use set-based control according to some embodiments.
[FIG. 5C]

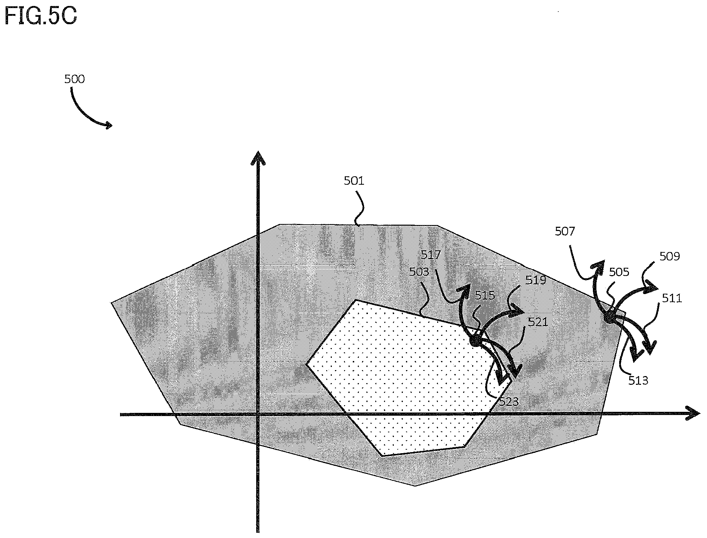

   FIG. 5C shows an example of a two-dimensional projection of a robust controllable set corresponding to a constraint set, according to an embodiment of the present disclosure.
[FIG. 6A]

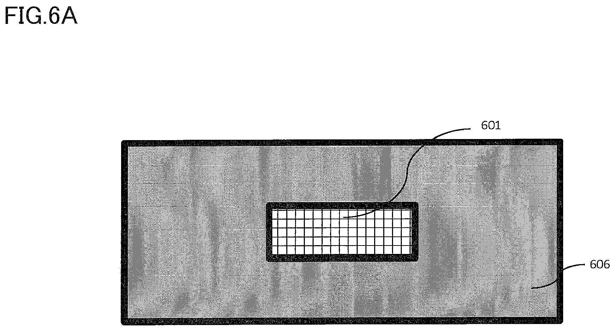

   FIG. 6A shows a keep-away set and its complement, according to an embodiment of the present disclosure.
[FIG. 6B]

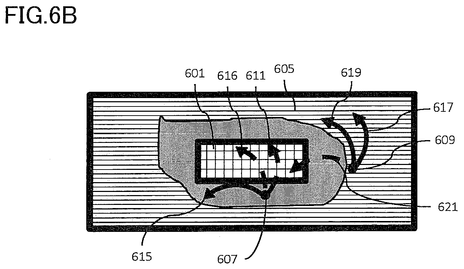

   FIG. 6B illustrates a stochastic controllable set, according to an embodiment of the present disclosure.
[FIG. 6C]

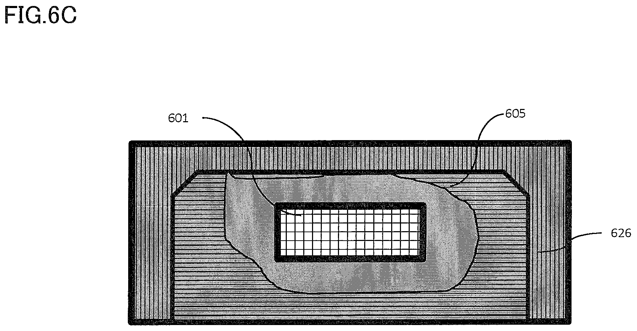

   FIG. 6C illustrates an inner-approximation of the stochastic controllable set, according to an embodiment of the present disclosure.
[FIG. 7]

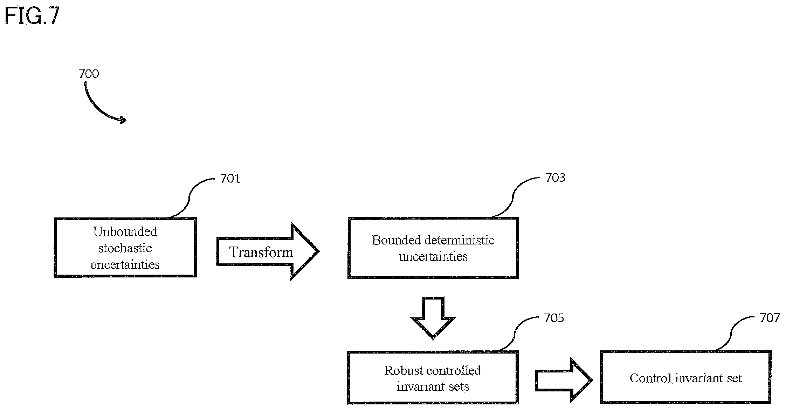

   FIG. 7 shows a schematic for determining the robust controllable set by leveraging the robust controllable set, according to an embodiment of the present disclosure.
[FIG. 8A]

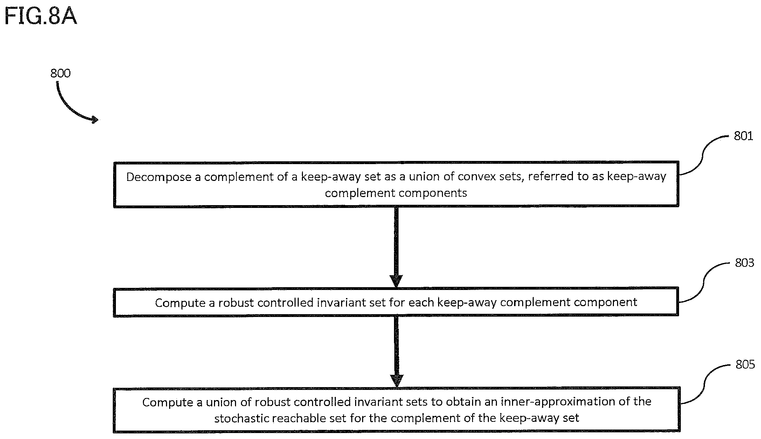

   FIG. 8A shows a block diagram of a method for computing the inner-approximation of the stochastic controllable set, based on the robust controllable sets, according to an embodiment of the present disclosure.
[FIG. 8B]

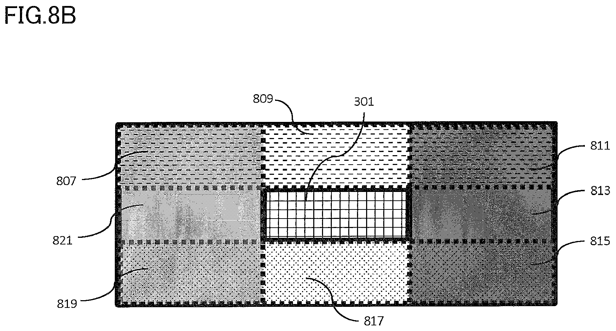

   FIG. 8B shows the complement of the keep-away set decomposed as the union of convex sets, according to an embodiment of the present disclosure.
[FIG. 8C]

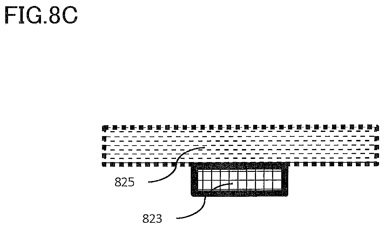

   FIG. 8C collectively shows convex halfspaces that together define the complement of the keep-away set used by some embodiments.
[FIG. 8D]

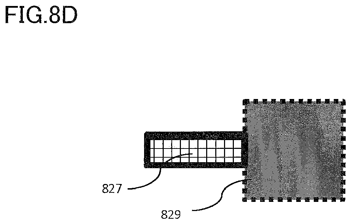

   FIG. 8D collectively shows convex halfspaces that together define the complement of the keep-away set used by some embodiments.
[FIG. 8E]

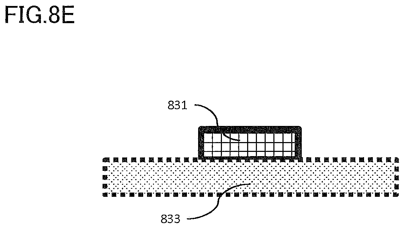

   FIG. 8E collectively shows convex halfspaces that together define the complement of the keep-away set used by some embodiments.
[FIG. 8F]

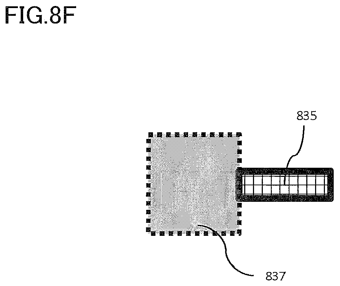

   FIG. 8F collectively shows convex halfspaces that together define the complement of the keep-away set used by some embodiments.
[FIG. 9]

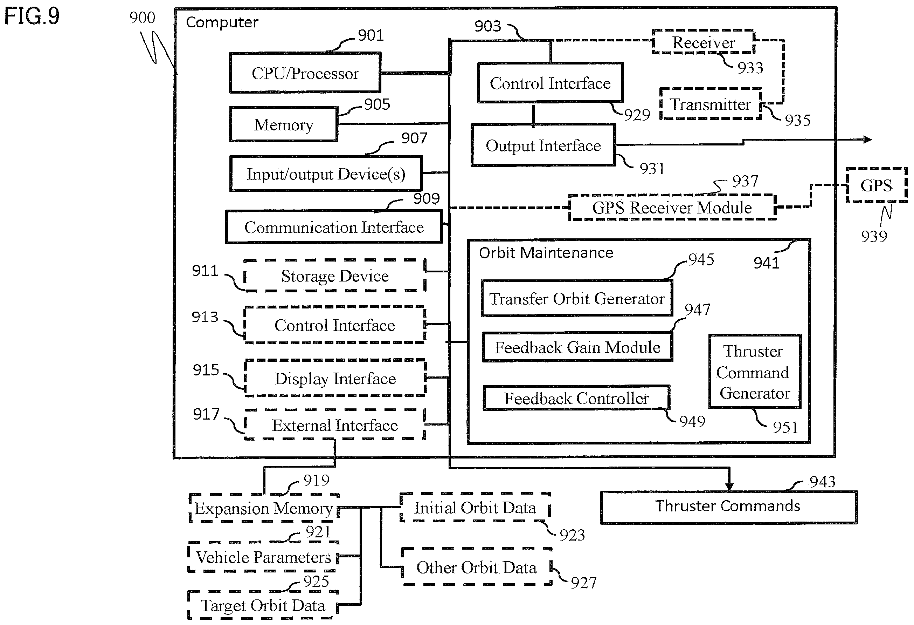

   FIG. 9 is a schematic diagram illustrating some components used for implementing the methods and the systems of the present disclosure.
[FIG. 10]

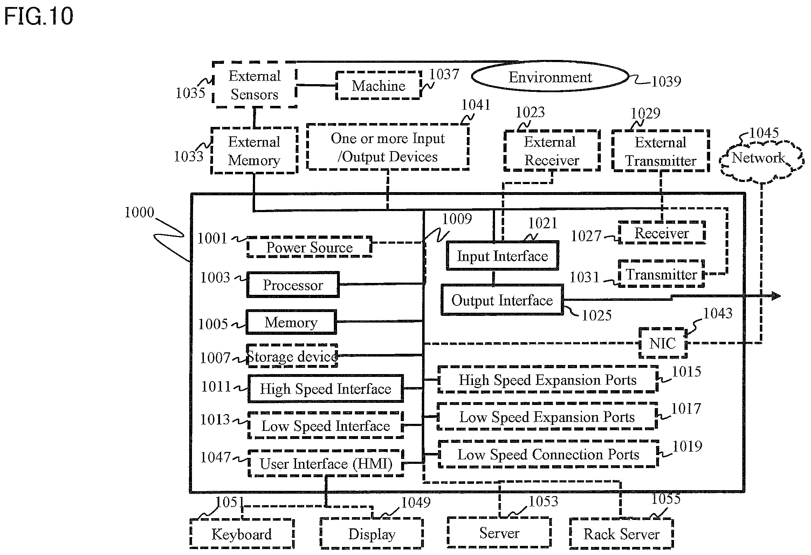

   FIG. 10 is a schematic illustrating by non-limiting example a computing apparatus for implementing the methods and the systems of the present disclosure.
[FIG. 11A]

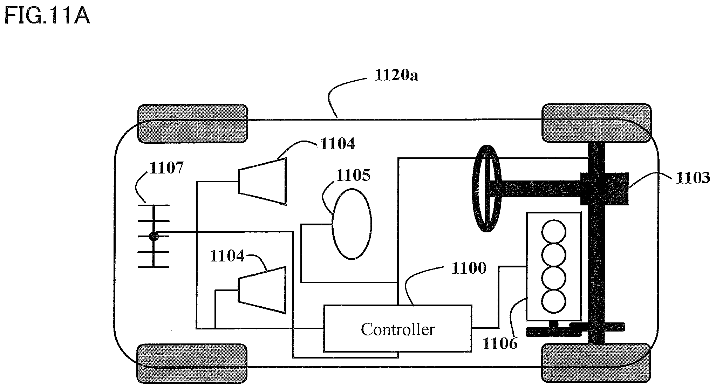

   FIG. 11A shows a schematic of vehicle including the controller, according to some embodiments of the present disclosure.
[FIG. 11B]

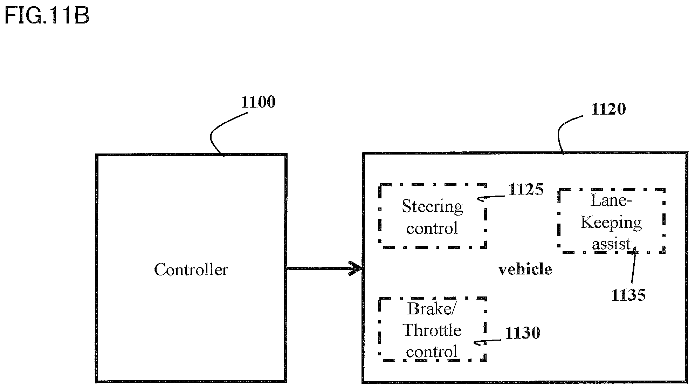

   FIG. 11B shows a schematic of interaction between the controller and controller of vehicle, according to some embodiments of the present disclosure.
[FIG. 11C]

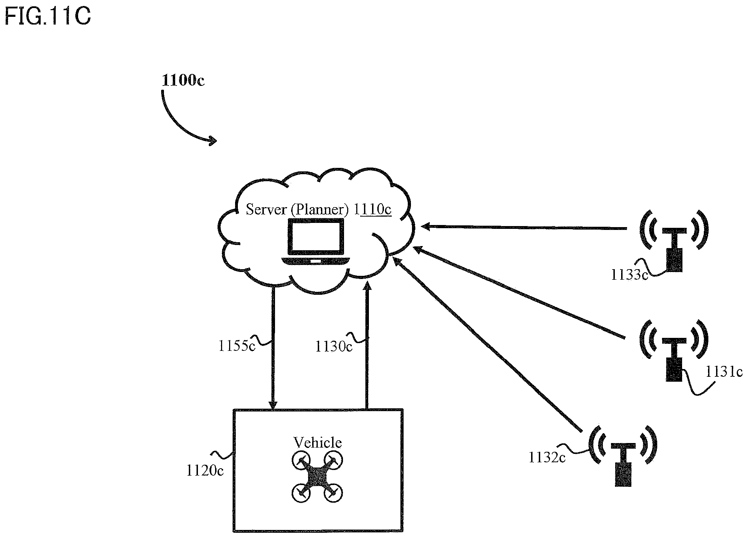

   FIG. 11C shows a schematic of an embodiment where an unmanned aerial vehicle (UAV) is controlled using the controller implemented on a server, according to some embodiments of the present disclosure.

### [Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as openended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

FIG. 1A shows a block diagram of a feedback controller 110 for controlling the operation of a mechanical system subject to uncertainty on the state of the operation of the system according to some embodiments. The feedback controller 110 includes at least one processor and a non-transitory memory. The processor may be a single-core processor, a multi-core processor, a computing cluster, or any number of other configurations. The memory may include random access memory (RAM), read-only memory (ROM), flash memory, or any other suitable memory system. Additionally, in some embodiments, the memory may be implemented using a hard drive, an optical drive, a thumb drive, an array of drives, or any combination thereof. Memory has instructions stored thereon that, when executed by the processor, cause the feedback controller to perform the control operations according to the embodiments.

To control the system, controller 110 collects 101 a feedback signal indicative of the current state of the operation of the system subject to constraints and current uncertainty on the current state of the operation of the system. Examples of constraints on the system include staying with an operating region, eventually reaching an operating region, avoiding obstacles in the environment. Exemplary uncertainties acting on the system include actuation uncertainty, errors in modeling, and sensing errors.

In a number of control applications employed by the embodiments, the current uncertainty lies in a symmetric bounded set and includes one or a combination of uncertainty on the dynamics of the system, uncertainty on a state of the system, uncertainty on control commands to the system, and uncertainty on constraints on the state of the operation of the system. For example, the symmetric bounded set containing the uncertainty may be an ellipsoid that has a pre-specified probability mass, and the ellipsoid is characterized either by the first two statistical moments of the uncertainty or under the assumption that the uncertainty has a Gaussian distribution. Another example for the symmetric bounded set is that the uncertainty lies in an axis-aligned hypercuboid where each edges of the hypercuboid indicates the uncertainty along each state dimension and the uncertainty is independent across the state dimensions.

Given the current state, constraints, and uncertainties of the operation, controller 110 determines 102 a robust controllable (RC) set for maintaining the state of the system within a prediction horizon. In various embodiments, the controller determines the RC set using closed-form expressions on a constrained zonotope modeling sets that characterize the constraints on the state of the operation of the system and an affine transformation of the symmetric bounded set inclosing the current uncertainty into a high-dimensional space of the constrained zonotopic representation. The closed-form expressions include a closed-form approximation of a Pontryagin difference between the constrained zonotopic representation and the zonotopic transformation of the symmetric bounded set allowing to determine the RC set in a computationally efficient manner.

Given the RC set, the controller determines 103 a control command for controlling the operation of the system, and submits the control command to an actuator of the system causing a change in the state of the operation of the system.

FIG. 1B shows a schematic of some principles employed by different embodiments. Some embodiments are based on the recognition that robust controllable sets can be computed using polyhedral computational geometry 110b. Specifically, the robust controllable sets can be obtained via a set recursion involving set operations like intersection, affine transformation, Minkowski sum, and Pontryagin difference. However, given one or more bounded polyhedra characterized by linear constraints, the Minkowski sum 120b operation requires solving a vertex-facet enumeration problem, which is known to be NP-hard. Consequently, existing approaches using polyhedral computational geometry suffer from numerical issues when used in high dimensions, and are limited to low-dimensional systems.

Some embodiments are based on recognizing that constrained zonotopes 130b provide an alternative representation of bounded polyhedrons (also called polytopes). A constrained zonotopic representation of a polytope characterizes the polytope as an affine transformation (projection) of the intersection of a unit hyper-cube in a high-dimensional space and an affine set. Affine sets are solution sets to some collection of linear equations. Constrained zonotopes provide closed-form, easy-to-evaluate expressions to compute the intersection, affine transformation, and Minkowski sum. However, no closed-form expression exists for the computation of the Pontraygin difference 140b.

Some embodiments are based on recognizing that instead of considering the generic form of the Pontraygin difference, a computationally tractable approach for the Pontraygin difference between a constrained zonotope and a centrally symmetric, convex, and compact set is what is needed for many practical control applications. In addition, for these types of control applications, the Pontraygin difference can be inner- or outer-approximated with closed-form expressions 150b.

FIG. 1C shows an illustration of the benefits of the proposed method in computing robust controllable sets using constrained zonotopes computational geometry 130b, according to an embodiment of the present disclosure. Schematic 105 shows an illustration of a robust controllable set 108 computed for the set of constraints 107 based on some known post-failure characteristics. Boxes 106 and 110 highlight an advantage and three main shortfalls of the existing approach (shown in box 106) over the proposed method (shown in box 110). Specifically, the existing approach of using polytopes to compute the robust controllable set has the advantage of being applicable to a broad range of bounded uncertainties. On the other hand, the proposed approach requires the uncertainty to be symmetric about a point, which encompasses a sufficiently large class of uncertainty models. However, the proposed approach has three main advantages over the existing approaches. First, the proposed method admits closed-form expressions for all the necessary set operations used in robust controllable set computation. Consequently, the proposed method is orders of magnitude faster than the existing approaches for large-dimensional systems or for set computation over long horizons. Second, the proposed method's speed allows for possible online computation of the sets, which can not be accomplished with existing approaches. Third, the proposed method uses standard linear algebra to arrive at the closed-form expressions and does not require a specialized tool to solve the vertex-facet enumeration problem that plagues the existing approach.

### Polytopes, zonotopes, and constrained zonotopes

Different embodiments use different properties of computational geometry employing a constrained zonotope.

FIG. 2A illustrates a convex and compact set 201 that is centrally symmetric about point 202 having properties employed by some embodiments. Set 201 is convex since the line segment 205 joining any two points 203 and 204 is completely contained in set 201. In Euclidean spaces, the set 201 is compact since it is closed and bounded. Finally, set 201 is centrally symmetric about point 202, since for any point 206 in set 201, its reflection 207 about point 202 is also contained in set 201.

As used herein, polytopes are a collection of linear constraints that together form a bounded set. A polytope is formally defined as $P = \left\{x\left|{a}_{i}^{⊤}x\leq {b}_{i} for i=1, 2,…, {N}_{P}\right.\right\} ⊂ {ℝ}^{n} .$ (1)

Here, ${a}_{i} ∈ {ℝ}^{n}$ and ${b}_{i} ∈ ℝ$ are vectors and scalars that define the individual linear constraints that together (upon their intersection) form 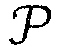 . Polytopes form a broad class of convex and compact sets, and it is well-known that any arbitrary convex and compact set can be approximated to a desired accuracy using a polytope. The polytope described in (1) is said to be in its half-space representation form. Alternatively, the polytope can be described as a convex combination of its vertices, in which case it is said to be in its vertex representation form. Recall that converting a polytope from one form to another is known as the vertex-facet enumeration problem, and is known to be NP-hard.

FIG. 2B illustrates a zonotope employed by some embodiments. Zonotopes are a special class of polytopes that are defined by an affine transformation of a unit box. Specifically, set 211 is a zonotope that was defined by an affine transformation 215 of a unit box 212. Observe how the affine transformation 215 deforms the standard axes 213 that are normal to the sides of the unit box 212 to define a new set of deformed axes 218 that are normal to the sides of the zonotope. Formally, a zonotope is defined as $Z = \left\{\left.Gξ+c\right|{\left‖ξ\right‖}_{∞}\leq 1\right\} ⊂ {ℝ}^{n} .$ (2)

Here, $G ∈ {ℝ}^{n \times {N}_{Z}}$ and $c ∈ {ℝ}^{n}$ are a matrix and a vector respectively that together define the affine transformation 215. The unit box 212 is defined by the set $\left\{{\left‖ξ\right‖}_{∞}\leq 1\right\} ⊂ {ℝ}^{{N}_{Z}}$. While FIG. 2B shows the case where *n = N_{Z},* it need not always be the case. In the case where n < *N_{Z},* the affine transformation projects the higher-dimensional unit box 212 to a lower-dimensional set 211. By construction, a zonotope is a convex, compact set that is centrally symmetric about *c* 219.

Constrained zonotopes are closely related to polytopes (1) and zonotopes (2). Formally, a constrained zonotope is defined as

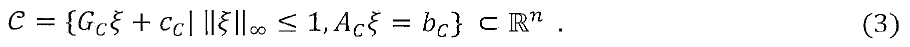

Similarly to (2), ${G}_{C} ∈ {ℝ}^{n \times {N}_{C}}$ and ${c}_{C} ∈ {ℝ}^{n}$ are a matrix and a vector respectively that together define the affine transformation of the high-dimensional space ${ℝ}^{{N}_{C}}$ (since *N_{C}* > n typically). However, unlike (2), (3) includes a collection of linear equality constraints *A_{C}ξ = b_{C}.*

FIG. 2C illustrates a constrained zonotope employed by some embodiments. The set 221 is a constrained zonotope. It is defined in two stages. Similarly to FIG. 2B, the unit box 222 is defined by the set $\left\{{\left‖ξ\right‖}_{∞}\leq 1\right\} ⊂ {ℝ}^{{N}_{Z}}$*.* In the first stage, a unit box 222 is intersected with a collection of linear constraints $\left\{\left.ξ\right|{A}_{C}ξ={b}_{C}\right\} ⊂ {ℝ}^{{N}_{C}}$ that form a hyperline 223. The intersection operation 225 produces the set 224. The set 224 is formally defined as $\left\{\left.ξ\right|{\left‖ξ\right‖}_{∞}\leq 1, {A}_{C}ξ={b}_{C}\right\} ⊂ {ℝ}^{{N}_{C}}$*.* Observe that the coordinate space 227 has not changed under this operation. Next, in the second stage, the set 224 undergoes an affine transformation 229 as characterized by (*G_{C}, c_{C}*). In this case, observe that the three-dimensional set 224 (*N_{C}* = 3) was projected to a two-dimensional set 221 (n = 2), as indicated by the coordinate axes 228.

Constrained zonotopes are an alternative description of a polytope and some embodiments benefit from understanding that every polytope (1) has a constrained zonotopic representation, and vice-versa.

### Set operations

For any sets 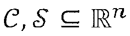 and $W ⊆ {ℝ}^{m}$, and a matrix $R ∈ {ℝ}^{m \times n}$, define the set operations (affine map, Minkowski sum ⊕ , intersection with inverse affine map ∩*_{R}*, and Pontryagin difference ⊖): 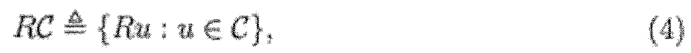 $C ⊕ S ≜ \left\{u+υ:u∈C, υ∈S\right\} ,$ (5)

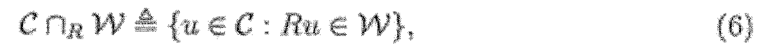

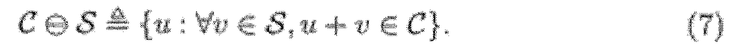

For polytopes 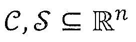 and $W ⊆ {ℝ}^{m}$, all the above operations yield polytopes. However, their computation is complicated by the fact that the exact implementation of operations (4) and (5) require the polytopes in vertex representation form (especially in higher dimensions), while operations (6) and (7) require the polytopes in half-space representation form. Furthermore, the process of converting a polytope from its half-space representation form to its vertex representation form is known to be an NP-hard problem.

Some embodiments are based on the recognition that there is a need for tractable approaches to implement the set operations (4), (5), (6), and (7) to compute robust controllable sets and stochastic controllable sets.

Some embodiments are based on the recognition that constrained zonotopes have closed-form expressions for the above set operations, except for the Pontryagin difference: 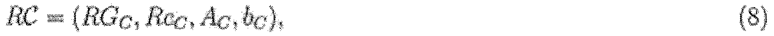 $C ⊕ S = \left(\left[{G}_{C}, {G}_{S}\right], {c}_{C}+{c}_{S}, \left[{A}_{C}, 0; 0, {A}_{S}\right], \left[{b}_{C}; {b}_{S}\right]\right) ,$ (9) $C {∩}_{R} W = \left(\left[{G}_{C}, 0\right], {c}_{C}, \left[{A}_{C}, 0; 0, {A}_{W}; {RG}_{C},-{G}_{W}\right], \left[{b}_{C}; {b}_{W}; {c}_{W}-{Rc}_{C}\right]\right) ,$ (10)

It is an object of some embodiments to provide a method to compute an inner- and outer-approximation of the Pontryagin difference of a constrained zonotope and a convex, compact set that is symmetric about some point.

### Pontryagin difference using constrained zonotopes

FIG. 3A illustrates the Pontryagin difference between two sets employed by some embodiments. Specifically, compute 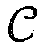 ⊖ 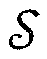 which is the set 301, where 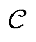 is a rectangle 302 and 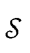 is a circle 303. The operation 305 implements (7). Hence, the set 301 satisfies the requirement that for any *x* ∈ 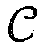 ⊖ 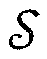 *,* the set 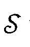 translated by *x* is contained in 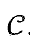 This is evidenced by the sets 303, 304, 305, and 306.

FIG. 3B illustrates an inner-approximation and outer-approximation of the set 301 employed by some embodiments. It is an object of some embodiments to provide a method to compute an inner-approximation 308 and outer-approximation 309 of the Pontryagin difference 301 when the set 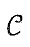 is a constrained zonotope and the set 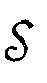 is a convex, compact set that is symmetric about some point.

FIG. 3C shows various examples of sets that are convex, compact, and symmetric about some point having principles employed by some embodiments. The set 211, which is a zonotope as defined by (2), is a convex and compact set that is symmetric about the point c 219, as shown in FIG. 2B. Some other examples include ellipsoids and convex unions of symmetric intervals. Formally, these sets are given as follows: $∃ \left({G}_{Z}, {c}_{Z}\right) ∈ {ℝ}^{n \times {N}_{z}} \times {ℝ}^{n} : Z = \left\{{G}_{Z}ξ+{c}_{Z}:{\left‖ξ\right‖}_{∞}\leq 1\right\} ,$ (11) $∃ \left({G}_{E}, {c}_{E}\right) ∈ {ℝ}^{n \times n} \times {ℝ}^{n} : E = \left\{{G}_{E}ξ+{c}_{E}:{\left‖ξ\right‖}_{2}\leq 1\right\} ,$ (12) $∃ \left({G}_{I}, {c}_{I}\right) ∈ {ℝ}^{n \times {N}_{I}} \times {ℝ}^{n} : I = \left\{{G}_{I}ξ+{c}_{I}:{\left‖ξ\right‖}_{1}\leq 1\right\} ,$ (13)

Here, (11) is exactly the same as (2), while (12) defines an ellipsoid 310 symmetric about a point 311, and (13) defines a convex union of symmetric intervals 315 symmetric about a point 316. Both the sets 310 and 315 are convex and compact. Observe that the set 315 is a convex hull of the union of intervals are of the form $\left〚-{g}_{i}, {g}_{i}\right〛$ where *gᵢ* are the columns of the matrix *G_{I}.* Specifically, it is the convex hull of the union of the intervals 327, 328, and 329 that is formed by 322 and 325, 323 and 326, and 321 and 324.

Some embodiments are based on the recognition that it is possible and feasible to compute a constrained zonotope 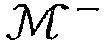 that inner-approximates 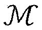 *=* 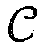 ⊖ 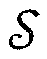 *,* given a non-empty constrained zonotopic minuend 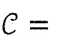 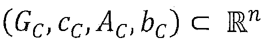 and a convex and compact subtrahend 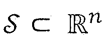 that is symmetric about any ${c}_{S} ∈ {ℝ}^{n}$. Specifically, let $Γ : {ℝ}^{{N}_{C} \times n}$ solve the following system of linear equations, $\left[\begin{matrix}{G}_{C} \\ {A}_{C}\end{matrix}\right] Γ = \left[\begin{matrix}{I}_{n} \\ {0}_{{M}_{C} \times n}\end{matrix}\right] ,$ (14) and let $D : {ℝ}^{{N}_{C} \times {N}_{C}}$ be a diagonal matrix with diagonal entries 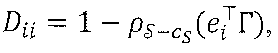 where 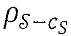 (*ℓ*) = ( 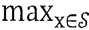 ℓ^{T}*x*) + ℓ^{T}*c_{S}* and *eᵢ* denotes the standard axes in ${ℝ}^{{N}_{C}}$ for each *i* = 1, 2, ... , *N_{C}.* Then, the constrained zonotope 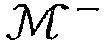 = (*G_{C} D, c_{C} - c_{S}, A_{C} D, b_{C}*), provided *Dᵢᵢ* ≥ 0 for every *i* = 1, 2, ... , *N_{C}.*

FIG. 3D shows pseudocode of an algorithm of a method for computing an inner-approximation of the Pontryagin difference between a constrained zonotope 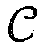 and a convex, compact set 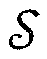 that is symmetric about a point *c_{S}* according to some embodiments. In Algorithm 1, Line 1 computes a set 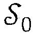 corresponding to that translates S by the point of symmetry -*c_{S}*, such that 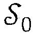 is now convex and compact, and symmetric about the origin. Next, in Line 2, computes a solution to (14) using the Moore-Penrose pseudoinverse of the coefficient matrix in (14). Next, in Line 3, it sets up a diagonal matrix D and, in Line 5, returns the inner-approximation to the Pontryagin difference 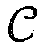 ⊖ 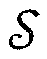 , provided all the diagonal entries of D are non-negative.

FIG. 3E illustrates the intuition behind the algorithm described in FIG. 3D used to compute an inner-approximation of the Pontryagin difference between a constrained zonotope and a convex, compact set that is symmetric about a point. Specifically, it computes an inner-approximation 331 of the Pontryagin difference 330 between the constrained zonotope 211 as defined in FIG. 2C and the convex union of symmetric intervals as defined in FIG. 3C. After solving the linear equations (14), we define the set 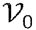 = Γ( 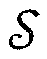 - c_{S}). The set 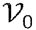 is 332 obtained via an affine transformation 333 of S, the set 315. Observe that set 332 is often of a higher dimension than set 315, but is of the same dimension as set 224. Next, we can show that the Pontryagin difference (denoted by operation 335) between sets 224 and 332, denoted by set 334, is available in closed-form. Consequently, using the affine transformation 229, we obtain an inner-approximation inner-approximation 331 of the Pontryagin difference 330.

FIG. 4A illustrates an algorithm to compute the polytopic outer-approximation of a constrained zonotope according to some embodiments. As discussed in FIG. 3B, Algorithm 2 described in FIG. 4A provides a convex polyhedron P that contains a given full-dimensional constrained zonotope C. In Algorithm 2, Line 1 sets up a matrix V where the columns *vᵢ* solve an equation similar to (14), and normalize it such that each of the columns *vᵢ* lie in a unit ℓ₁-norm ball. Next, Lines 2 and 3 use simple affine transformations to generate the half-space representation of the polyhedron that outer-approximates 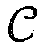 .

FIG. 4B shows pseudocode of an algorithm of a method for computing a constrained zonotopic outer-approximation of the Pontryagin difference between a constrained zonotope and a convex, compact set that is symmetric about a point according to some embodiments. The algorithm uses the observation that the Pontryagin difference between a polyhedron and a convex and compact set is available in closed form ${M}_{p}^{+}$(Line 2), and that the constrained zonotope 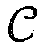 - *c_{S}* is guaranteed to contain the set 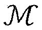 = 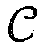 ⊖ 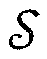 . Consequently, the last step of Algorithm 3 produces a constrained zonotope 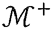 that is guaranteed to contain the set 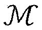 = 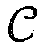 ⊖ 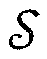 (Line 3).

### Exemplary Embodiment of fault-tolerant control: Abort-safe spacecraft control under uncertainty

FIG. 5A illustrates the motion of spacecraft 591 in a multi-object celestial system, according to an embodiment of the present disclosure. The spacecraft 591 may be configured to rendezvous with a target 593 by following a trajectory 594. The target 593 may be a spacecraft, a celestial body, an international space station, or orbital debris. For the purpose of explanation, the target is 593 is illustrated as the International Space Station. A keep-away zone 592 exists around target 593. The keep-away zone 592 refers to a region that spacecraft 591 should not enter without authorization. Additionally or alternatively, the keep-away zone 592 corresponds to a keep-away set, which is a collection of states including spacecraft positions and velocities that spacecraft 591 should stay outside of.

It is an objective of some embodiments to control the motion of spacecraft 591 while avoiding an unauthorized entry into the keep-away zone 592 during a normal and abnormal (post-failure) operation of spacecraft 591. As used herein, the normal operation includes spacecraft 591 moving towards the keep-away zone 592. The abnormal (post-failure) operation includes one or a combination of a failure to receive the authorization to enter the keep-away zone 592 and a failure of at least one component of the spacecraft 591, for example, thrusters.

To achieve such a control objective, some embodiments provide a controller 110 for controlling the motion of spacecraft 591 during the normal and abnormal (post-failure) operation of spacecraft 591.

Some embodiments are based on the recognition that the post-failure desirable behavior may be enforced on the nominal trajectory via a collection of constraints that guarantee post-failure safety. Moreover, some embodiments are based on the recognition that these constraints may be computed using robust or stochastic controllable sets based on the post-failure characteristics.

Some embodiments are based on a recognition that achieving the aforementioned control objective (i.e., controlling the motion of spacecraft 591 while avoiding an unauthorized entry into the keep-away zone 592 during a normal and abnormal (post-failure) operation of spacecraft 591 is challenging because there are states of the spacecraft 591 in proximity of the keep-away zone 592 that may unavoidably lead the spacecraft 591 into the keep-away zone 592, even if the authorization to enter is rejected. The authorization to enter may be rejected based on any reason including a total or partial failure of propulsion of the spacecraft 591. As used herein, the state of spacecraft 591 includes the location of spacecraft 591 and at least one or a combination of a velocity and an acceleration of spacecraft 591. Additionally, internal and external forces acting on spacecraft 591 during its motion, such as inertia and force of gravity, may change the state of spacecraft 591 to specific states that may lead the spacecraft 591 into the keep-away zone 592, regardless of any efforts that the spacecraft 591 may perform.

Some embodiments are based on a recognition that the motion of the spacecraft 591 may be subject to uncertainty. The process noise may specify an actuation mismatch and/or unmodeled dynamics of the motion of the spacecraft 591. In addition to the process noise, the stochastic uncertainty may include measurement noise of an estimation of the state of the spacecraft. Since the motion of spacecraft 591 is subject to uncertainty, there is a need to avoid the unauthorized entry of spacecraft 591 into the keep-away zone 592 despite the uncertainty.

Some embodiments are based on the realization that this problem can be addressed by computing a union of a plurality of robust/stochastic controllable sets of values of the state of spacecraft 591 that the state of spacecraft 591 should be maintained within. The choice between the use of robust or stochastic controllable sets depends on the information available about the uncertainty in the problem.

When the uncertainty (process and measurement noise) is known to lie in pre-defined sets but can take any value in the set, then one can use robust controllable sets. Specifically, by ensuring that the designed rendezvous trajectory belongs to appropriate robust controllable sets, the trajectory is guaranteed to be abort-safe irrespective of the value taken by the uncertainty. However, depending upon the size of the pre-defined sets modeling the uncertainties, the resulting trajectory can be quite conservative (they may take more fuel or stop further away from the keep-out set) to hedge against the worst possible (in terms of the safety requirements) realization of the uncertainty.

On the other hand, if a probabilistic description of the uncertainty is made available or if the designer has access to sets in which the uncertainty is guaranteed to lie in a designer-specified likelihood, then one can use stochastic controllable sets and chance constraints. Specifically, by ensuring that the designed rendezvous trajectory belongs to appropriate stochastic controllable sets with appropriately chosen likelihoods (using chance constraints), the trajectory is guaranteed to be abort-safe with high likelihood. Compared to robust controllable sets, the trajectories designed using stochastic controllable sets are typically less conservative (they may take less fuel or stop closer to the keep-out set) since the problem formulation now allows for a small likelihood of unsafe behavior.

FIG. 5B shows a block diagram of a trajectory design method 120 for fault-tolerant applications that use set-based control according to some embodiments. Method 120, starting with the current state 125 of the system, designs a control action to apply 126 to spacecraft 591 based on whether a failure 127 has occurred or not.

The inputs to the method 120 are highlighted in dashed boxes - the current state of the system 125, characteristics of the system under nominal operation 135 like the nominal dynamics 132 and the nominal uncertainty model 133, constraints to guarantee nominal task satisfaction 141, objective for nominal control design 145, characteristics of the system under post-failure operation 151 like the post-failure dynamics 153, the post-failure uncertainty model 154, and the post-failure safety constraints 152.

The output of method 120 is a control action 126 that depends on the current state of system 125 and whether a failure 127 has occurred or not. In the spacecraft rendezvous, an example of failure may be that a thruster has failed and now the spacecraft only has limited actuation and is now subject to dynamics 153 and uncertainty model 154 which is different from nominal dynamics 132 and nominal uncertainty model 133.

When a failure has not occurred, method 120 designs the control to apply for nominal operation 130 using a control law for nominal operation 131. Such a control law can be designed using existing control paradigms like model predictive control or constrained control theory. The control law in 131 enforces the characteristics of the system under nominal operation 135 like the nominal dynamics 132 and the nominal uncertainty model 133.

Additionally, control law 131 ensures that the constraints to guarantee the completion of tasks in nominal operation 142 are enforced. In the spacecraft rendezvous, an example of such a constraint 142 is that the nominal rendezvous must lie inside a line-of-sight cone originating from the target station. Such constraints are hard constraints and may not be violated during the nominal operation of the system. In some implementations, method 120 uses constraint tightening 141 to arrive at a set of tightened constraints to guarantee nominal task constraints 140, whose enforcement ensures that the use of control law 131 will ensure that the nominal system 132 satisfies constraints 142, despite the nominal uncertainty 133. Additionally, it optimizes the objective for nominal control design that is optimized during the design of the control law 131. The objective is typically composed of one or more performance objectives and soft constraints. In the spacecraft rendezvous, an example of the performance objective may be the energy used during the nominal maneuver, and an example of soft constraints may be that the spacecraft during the nominal maneuver should point towards a star. Soft constraints, unlike the hard constraints specified in 142, may be violated if a need arises.

Additionally, the control law in 131 must ensure that the system is always maintained in a configuration to guarantee post-failure safety in the event of a failure. Specifically, the system must still satisfy post-failure desirable behavior encoded in post-failure safety constraints 152 under post-failure dynamics 153 and post-failure uncertainty model 154. In the spacecraft rendezvous, an example of the post-failure safety may be that, in the event of a thruster failure, the spacecraft can still avoid the target under limited actuation (potentially via the reaction control systems) and a dynamics model that may be different from the nominal dynamics due to the thruster failure.

Some embodiments are based on the recognition that the post-failure desirable behavior encoded in 151 may be enforced on the nominal trajectory via a collection of constraints 157 that guarantee post-failure safety. Moreover, some embodiments are based on the recognition that these constraints 157 may be computed using robust or stochastic controllable sets based on the post-failure characteristics 151. These controllable sets also provide a control law for post-failure operation 159.

Similarly to steps 142 and 140, some embodiments use constraint tightening 158 on the identified constraints 157 to obtain a set of tightened constraints on the nominal trajectory that guarantees post-failure safety.

Thus, the control law for the nominal operation 131 takes as input the current state 125, the tightened constraints to guarantee nominal task satisfaction 140, the objective for nominal control design 145, the characteristics of the system under nominal operation 135 including the nominal dynamics 132 and the nominal uncertainty model 133, and the tightened constraints to guarantee post-failure safety 150, and provides a control action 130 to apply under nominal operation.

On the other hand, when a failure has occurred, the embodiments use the control law for post-failure operation 159 and the current state 125 to obtain a control action 160 to apply.

The control that is finally applied to system 126 is selected from the control action to apply under nominal operation 130 and the control action to apply in the event of failure 160, based on whether a failure has occurred 127.

It is an object of some embodiments to provide a system and a control system and a method to design the constraints 157 to guarantee post-failure safety using robust controllable sets or stochastic controllable sets that are approximated using constrained zonotopes. The proposed approach has a significant computational advantage over existing approaches without compromising the accuracy of the computed sets.

In some embodiments, different implementations consider two types of post-failure uncertainty models in post-failure uncertainty model 154, i.e., bounded non-stochastic uncertainty and stochastic uncertainty. In both cases, the embodiments use reachability to identify the constraints to guarantee post-failure safety 157.

In such a manner, some embodiments disclose a spacecraft 591 for moving in a multi-object celestial system while avoiding an unauthorized entry into a keep-away zone during a normal and an abnormal operation of the spacecraft, wherein the normal operation includes moving towards a target in the keep-away zone, and wherein the abnormal operation includes one or a combination of a failure to receive an authorization to enter the keep-away zone and a failure of at least one component of the spacecraft.

The spacecraft includes the feedback controller 110, a set of thrusters configured to change the state of a spacecraft according to a sequence of control commands produced by the feedback controller 110, a set of sensors configured to produce measurements indicative of the state of the spacecraft; and a circuitry configured to detect the abnormal operation of the spacecraft.

In this embodiment, the feedback controller is a fault-tolerant controller is configured to perform an abort-safe control under the uncertainty. To that end, the feedback controller is configured to execute, during the normal operation of the spacecraft, a nominal control law subject to constraints on maintaining a state of the spacecraft within a union of a plurality of control invariant sets of values of the state of the spacecraft that partially or completely enclose the keep-away zone, wherein the state of the spacecraft includes a location of the spacecraft and at least one or a combination of a velocity and an acceleration of the spacecraft, wherein each of the plurality of control invariant sets is determined using constrained zonotopes computational geometry such that when the state of the spacecraft is within a control invariant set there is a control command produced by the nominal control law that maintains the state of the spacecraft within the control invariant set despite internal and external forces acting on the spacecraft; and execute, upon detecting the abnormal operation of the spacecraft, an abort control law associated with the control invariant set including a current state of the spacecraft, wherein at least some different abort control laws are associated with at least some different control invariant sets, and wherein the abort control law is jointly and interdependently determined for the corresponding control invariant set to produce abort control commands moving the spacecraft while avoiding the keep-away zone for any state within the corresponding control invariant set.

### Case 1: Robust controllable sets via constrained zonotopes (Post-failure uncertainty is a bounded non-stochastic uncertainty)

In some implementations, each of the control invariant sets is a stochastic reachable set determined for a possible abnormal operation defined by the first likelihood of the unbounded stochastic uncertainty.

Robust controllable (RC) sets, also known as robust backward reach sets, characterize a set of states from which a collection of possibly time-varying state constraints can be satisfied by a controlled state trajectory, under bounded control authority and bounded uncertainty. RC sets are essential for robust model predictive control, fault-tolerant control, and verification of dynamical systems, and have been used in a broad range of applications in space, transportation, and robotics. For discrete-time linear systems with additive uncertainty and bounded, polytopic state and input constraints, exact RC sets are known to be polytopes, and the RC sets may be computed using set manipulations of polytopes. Polytopes are convex geometric shapes, and their manipulations have been well-studied in the literature. However, polytope-based RC set computation involves a projection that either can be accomplished via vertex-facet enumeration or Fourier-Motzkin elimination or multi-parametric optimization. These operations are either computationally prohibitive or cause numerical issues for high-dimensional system models arising from complex systems and/or in applications involving long safety horizons.

FIG. 5C shows an example of a two-dimensional projection 500 of a robust controllable set 503 corresponding to a constraint set 501, according to an embodiment of the present disclosure. In an embodiment, the constraint set 501 may be a multi-dimensional polytope determined by hyperplanes, which are represented by linear inequalities, along multiple dimensions corresponding to the constraints on the motion of the spacecraft 591. The constraint set 501 may encode the states of the spacecraft 591 that are safe. Any state of the spacecraft 591 within the robust controllable set 503, there exists a control command maintaining the state of the spacecraft 591 within the constraint set 501 for the known or the admissible future states of the nominal trajectory, despite the bounded uncertainty affecting the nominal dynamics. For example, for any state of the spacecraft 591 such as a state 515 within the robust controllable subset 503 and within all possible control inputs 517-523 that the controller 110 can execute, there is at least one control command 523 that maintains the state of the spacecraft 591 within the robust controllable subset 503, despite the bounded uncertainty affecting the nominal dynamics. On the other hand, a state 505 can be feasible for one iteration, but all control commands 507-513 that the controller 110 is allowed to take during the next iteration can bring the state of the spacecraft 591 outside of the constraint set 501, possibly due to the bounded uncertainty affecting the nominal dynamics.

Consider a linear time-varying system with the following dynamics ${x}_{t + 1} = {A}_{t} {x}_{t} + {B}_{t} {u}_{t} + {F}_{t} {w}_{t}$ (15) with state ${x}_{t} ∈ {ℝ}^{n}$, input ${u}_{t} ∈ {U}_{t} ⊂ {ℝ}^{m}$, disturbance ${w}_{t} ∈ {W}_{t} ⊂ {ℝ}^{p}$, where the (possibly time-varying) sets 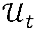 *,* 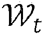 are assumed to be convex and compact, and the (possibly time-varying) matrices *At, Bₜ,* and *Fₜ* are appropriately defined for t=0, 1, .... For some time horizon $T ∈ ℕ$, let *Xₜ* denote the (possibly time-varying) collection of constraints for *t =* 0,1, *..., T.*

Then, we compute the robust controllable set 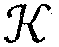 = 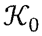 using the following set recursion with 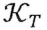 *= X_{T}:* 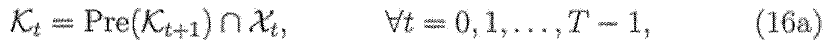 $Pre \left({K}_{t + 1}\right) ≜ \left\{x:{A}_{t}x∈\left({K}_{t + 1}⊖{F}_{t}W\right)⊕\left(-{B}_{t}U\right)\right\} ,$ (16b)

Observe that the set recursion (16) uses all the set operations defined in (4)-(7). The sets 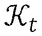 is guaranteed to be convex and compact. Moreover, these sets are guaranteed to be polytopic if the time-varying sets involved 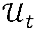 , *Xₜ* are also polytopes. However, the computation of 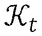 using polyhedral computational geometry is complicated by the fact that implementation of all set operations (4)-(7) requires the NP-hard problem of vertex-facet enumeration problem.

Some embodiments are based on the recognition that the set operations in (16) can be implemented exactly or approximated using constrained zonotopes without solving the NP-hard problem of vertex-facet enumeration.

In the following, we will assume that the input set 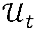 and the terminal constraint set *X_{T}* are convex polytopes, hence, representable as constrained zonotopes, and the additive disturbance set 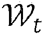 is a convex and compact set that is symmetric about any ${c}_{W} ∈ {ℝ}^{p}$. We will also use the fact that converting a convex polytope in half-space representation to an equivalent set in the constrained zonotopic is easily accomplished using optimization. Consequently, any convex polytope may also be thought of as a constrained zonotope.

Specifically, for a convex polyhedral *Xₜ* and invertible system matrix *Aₜ,* we can use the following set recursion: ${K}_{t , inner}^{interim , 1} ⊆ {K}_{t}^{interim , 1} = {K}_{t + 1} ⊖ {F}_{t} {W}_{t} ,$ (17) ${K}_{t}^{interim , 2} = {K}_{t , inner}^{interim , 1} ⊕ \left(-{B}_{t}{U}_{t}\right) ,$ (18) ${K}_{t}^{interim , 3} = {A}_{t}^{- 1} {K}_{t}^{interim , 2} ,$ (19) ${K}_{t} = {K}_{t}^{interim , 3} ∩ {X}_{t} .$ (20) where the recursion is initialized with *X_{T} = X_{T}* (a convex polytope, and hence representable via a constrained zonotope). Note that the steps (18)-(20) have closed-form expressions for the constrained zonotopic sets (see (8) to (10)) and the fact that constrained zonotope intersected with a halfspace also has a closed-form expression (see Algorithm 3 in FIG. 4B). Finally, the step (17) has an inner-approximation in the form of a constrained zonotope using Algorithm 1 in FIG. 3D and an outer-approximation in the form of a constrained zonotope using Algorithm 2 in FIG. 4B. Note that both algorithms have closed-form expressions when the disturbance set 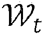 is an ellipsoid, zonotope, or a convex union of symmetric intervals.

Alternatively, for a convex polytopic *Xₜ* and (possibly non-invertible) system matrix *Aₜ,* we can use the following set recursion: ${K}_{t , inner}^{interim , 1} ⊆ {K}_{t}^{interim , 1} = {K}_{t + 1} ⊖ {F}_{t} {W}_{t} ,$ (21) ${K}_{t}^{interim , 2} = {K}_{t , inner}^{interim , 1} ⊕ \left(-{B}_{t}{U}_{t}\right) ,$ (22) ${K}_{t} = {X}_{t} {∩}_{{A}_{t}} {K}_{t}^{interim , 2} ,$ (23) where the recursion is initialized with *X_{T}* = *X_{T}* (a convex polytope, and hence representable via a constrained zonotope). Note that steps (22) and (23) have closed-form expressions for the constrained zonotopic sets (see (8) to (10)). Finally, step (21) has an inner-approximation in the form of a constrained zonotope using Algorithm 1 in FIG. 3D and an outer-approximation in the form of a constrained zonotope using Algorithm 2 in FIG. 4B. Note that both algorithms have closed-form expressions when the disturbance set 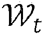 is an ellipsoid, zonotope, or a convex union of symmetric intervals.

### Case 2: Stochastic controllable sets via constrained zonotopes (Post-failure uncertainty is a stochastic uncertainty)

In alternative implementations, each of the control invariant sets is a robust control invariant set determined for the nominal control law with a bounded non-stochastic uncertainty corresponding to the first likelihood on the unbounded stochastic uncertainty.

Stochastic controllable (SC) sets are defined similarly to RC sets. Specifically, SC sets characterize a set of states from which a collection of possibly time-varying state constraints can be satisfied with a user-specified likelihood by a controlled state trajectory, under bounded control authority and stochastic uncertainty. The differences between SC sets and RC sets are two folds. First, SC sets accommodates stochastic (possibly unbounded) uncertainty, whereas RC sets require the uncertainty to be bounded but does not require any stochastic information. Second, while RC sets guarantee absolute constraint satisfaction, SC sets provide constraint satisfaction up to a user-specified likelihood. Like RC sets, SC sets are essential for stochastic model predictive control, fault-tolerant control, and verification of dynamical systems, and have been used in a broad range of applications in space, transportation, and robotics.

It is well-known that SC sets can be inner-approximated using appropriately defined RC sets. Consequently, the existing approaches to inner-approximate SC sets suffer from the same challenges identified above, and it is a goal of this disclosure to remedy these shortcomings in computation of SC sets by computing an inner-approximation of the SC sets using constrained zonotopes.

Each stochastic controllable set used to determine the robust controllable set inner-approximates the values of the state of the spacecraft 591 to guarantee the control invariance. In an embodiment, the inner-approximation of the stochastic controllable set is obtained as a union of stochastic controllable sets defined for each convex component of a complement of the keep-out set. An inner approximation of the stochastic controllable set is described below with reference to FIGs. 6A, 6B, and 6C.

FIG. 6A shows a keep-away set 601 and its complement 606, according to an embodiment of the present disclosure.

FIG. 6B illustrates a stochastic controllable set 605, according to an embodiment of the present disclosure. The stochastic controllable set 605 includes all states from which the controller 110 can maintain the spacecraft 591 safe (i.e., maintain the spacecraft 591 outside of the keep-away set 601) up to a specified likelihood despite the unbounded stochastic uncertainty. For an initial state 607, trajectories 611, 616, and 615 may be stochastic future state trajectories. For an initial state 609, trajectories 617, 619, and 621 may be the stochastic future state trajectories. Since the spacecraft 591 is required to stay outside the keep-away set 601, the trajectories 611, 616, and 621 are unsafe, while the trajectories 615, 617, and 619 are safe. In other words, the controller 110 can keep the spacecraft 591 starting from the initial state 609 safe with two-thirds likelihood, and the spacecraft 591 starting from the initial state 607 safe with one-third likelihood. Consequently, the set 605 (shown with horizontal pattern fill) is the stochastic controllable set corresponding to a safety likelihood of two-third. The stochastic controllable set 605 therefore includes the initial state 609, but not the initial state 607.

FIG. 6C illustrates an inner-approximation of the stochastic controllable set, according to an embodiment of the present disclosure. A set 626 (shown with vertical pattern fill) is an inner-approximation of a stochastic controllable set 605 (shown with horizontal pattern fill). Any state that lies in the set 626 also lies in the stochastic controllable set 605. It may be observed from FIG. 6C that neither the set 626 nor the stochastic controllable set 605 covers the entire complement of the keep-away set 601 (shown in grey without pattern fill).

According to an embodiment, the inner approximation of the stochastic controllable set may correspond to a robust controllable subset. For any state of the spacecraft 591 within the robust controllable subset, there exists a control command maintaining the state of the spacecraft 591 within the robust controllable subset for known or admissible future states of a nominal trajectory.

FIG. 7 shows a schematic 700 for determining the robust controllable set by leveraging the robust controllable set, according to an embodiment of the present disclosure. Various computational algorithms can be used for computing the robust controllable sets. However, these algorithms are not directly applicable to the problem with the presence of unbounded, stochastic uncertainties 402 including the probabilistic distribution of the process and/or the measurement noise. This is because the computational algorithms are applicable to a problem with presence of bounded, deterministic uncertainties.

To mitigate this problem, the unbounded stochastic uncertainties 701 are transformed into bounded deterministic uncertainties 703 with a predefined likelihood specifying a range of values on the unbounded stochastic uncertainties 701. The transformation of block 701 to 703 by converting the unbounded stochastic uncertainty in actuation and measurement to non-stochastic bounded uncertainties that lie in the sets *ε*_{act}, *ε*ₘₑₐₛ are chosen such that the likelihood of the actuation and measurement uncertainty lying in these sets is no smaller than ${α}_{act}^{\frac{1}{M}} , {α}_{meas}^{\frac{1}{M}}$ respectively, where *M* is a number of time steps for which safety must be guaranteed during an abort and *α*_{act}, *α*ₘₑₐₛ are selected such that the first likelihood *β* = *α*_{act} *α*ₘₑₐₛ. Next, the computational algorithms can be used to compute the robust controllable set 707. Further, based on the robust controllable sets 705, robust controllable sets 707 are determined. Specifically, in an embodiment, the inner-approximation of the stochastic controllable set can be determined based on the robust controllable sets 705. The determination of the inner-approximation of the stochastic controllable set, based on the robust controllable sets 705, is described below with reference to FIG. 8A.

FIG. 8A shows a block diagram of a method 800 for computing the inner-approximation of the stochastic controllable set, based on the robust controllable sets, according to an embodiment of the present disclosure. At block 801, the method 800 includes decomposing a complement of a keep-away set (e.g., the complement 303 of the keep-away set 301 as shown in FIG. 3A) as a union of convex sets.

FIG. 8B shows the complement of the keep-away set 301 decomposed as the union of convex sets, according to an embodiment of the present disclosure. Convex sets 807-821 form the union of convex sets. Specifically, the keep-away set 301 is polytope and the complement of the keep-away set 301 can be expressed as a union of halfspaces. Each of such halfspaces are convex.

FIGs. 8C-8F collectively show convex halfspaces that together define the complement of the keep-away set 301 used by some embodiments. Sets 823, 827, 831, and 835 are reproductions of the keep-away set 301. A set 825 includes sets 807, 809, and 811, and a set 829 includes sets 811, 813, and 815. A set 833 includes sets 815, 817, and 819, and a set 837 includes sets 819, 821, and 807. The sets 807-821, which are convex, are referred to as keep-away complement components.

Referring back to FIG. 8A, at block 803, the method 800 further includes computing a robust controllable set for each keep-away complement component. The robust controllable sets are computed for the dynamics of the spacecraft 591 under bounded uncertainty in the actuation and the measurement lying in *ε*_{act}, *ε*ₘₑₐₛ. In an embodiment, the computation of the robust controllable sets for any convex set S is done via a recursion backwards-in-time for k= {0, 1,..., M-1} initialized with 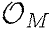 (*ε*_{act}, *ε*ₘₑₐₛ, *S*) = *S* ⊖ *ε*ₘₑₐₛ, as given below ${P}_{k} \left({E}_{act}, {E}_{meas}, S\right) = {O}_{k + 1} \left({E}_{act}, {E}_{meas}, S\right) ⊖ \left(-{E}_{meas}\right) ⊖ \left({BE}_{act}\right) ⊖ \left(-{AE}_{meas}\right)$ ${O}_{k} \left({E}_{act}, {E}_{meas}, S\right) = \left(S⊖\left(-{E}_{meas}\right)\right) ∩ \left\{z\left|Az∈{P}_{k}\right.\left({E}_{act}, {E}_{meas}, S\right)⊕\left(-BV\right)\right\}$

In the above equations, computational geometry operations ⊕, ⊖ refer to the Minkowski sum and the Pontryagin difference operations respectively, and *S* = *X* \ KeepOut*ᵢ* is selected for every index *i.*

At block 805, the method 800 further includes computing a union of the robust controllable sets to obtain the inner-approximation of the stochastic controllable set for the complement of the keep-away set, one for each index *i*. The inner-approximate guarantees the control invariance with the first likelihood of the unbounded stochastic uncertainty, over the horizon of M time steps. In other words, there exists an abort control law that that can steer the spacecraft 591 away from the keep-away set with the first likelihood for M time steps into the future, in the event of the abnormal (post-failure) operation.

In an embodiment, the robust controllable set and the corresponding abort control law are determined jointly and interdependently using a single computation of robust controllable set. The computation of the robust controllable set automatically generates a set of control actions for each state that maintains the spacecraft 591 within the robust controllable set. The set of control actions are characterized by the spacecraft dynamics, the control constraints, and the robust control set. The abort control law thus becomes selecting a control action from the set of control actions at each time step.

According to an embodiment, the abort control law to be applied in the event of the abnormal (post-failure) operation at time T is given by the following set-valued map defined for t=T,T+1,..., T+M ${V}_{t , eff} = \left\{u∈V\left|{Ay}_{t + T \left|T\right.}\right.+Bu∈\left({O}_{t + 1}\left({E}_{act}, {E}_{meas}, X\KeepOut\right)⊖\left(-{E}_{meas}\right)⊖\left({BE}_{act}\right)⊖\left(-{AE}_{meas}\right)\right)\right\} .$

The above equation defines an admissible set 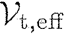 of abort control commands to be applied at time t within a limited available actuation 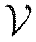 , a subset of actuation available under normal operation 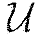 , such that the spacecraft 591 can be steered away from the keep-away set with likelihood no smaller than the first likelihood *β* = *α*_{act}*α*ₘₑₐₛ. By construction, the set 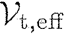 is a polytope.

Further, the nominal control law, which is applied during the normal operation, steers the spacecraft 591 to the target 593 in the keep-away set, while ensuring that the spacecraft 591 stays within the robust controllable sets and all the necessary state and input constraints are satisfied by the nominal control law. An example of such a nominal control law solves the optimization problem given by equation (1). In an embodiment, the nominal control law is designed using a model predictive controller (MPC). The MPC is based on an iterative, finite horizon optimization of a model of the dynamics of the spacecraft 591, a set of objectives of the motion of the spacecraft 591, and constraints on spacecraft propulsion system and motion. The MPC can anticipate future events to take appropriate control actions. According to an embodiment, the MPC may estimate a sequence of control steps over a prediction horizon acting on the spacecraft 591 under the effect of internal and external forces.

### Constraint tightening for enforcement of containment in a plurality of robust/stochastic controllable set

Back to FIG. 5B, some implementations consider two types of uncertainty models in nominal operation 133, i.e., bounded non-stochastic uncertainty and stochastic uncertainty. In both cases, we can use constraint tightening that uses nominal dynamics 132 to tighten the constraints so that the satisfaction of the resulting constraints 140 and 150 ensures that the nominal trajectory satisfies constraints 141 and 157, despite the nominal uncertainty 133.

When a single robust controllable set 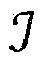 models 157 and a bounded non-stochastic uncertainty 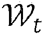 is used in nominal uncertainty model 133, then 150 is obtained by standard constraint tightening procedures, i.e., ${I}^{tighten} = I ⊖ \left({W}_{k}⊕{Reach}_{k \left|t\right.}\left(W, A\right)\right) ,$ (25)

Where Reach_{*k*|*t*} ( 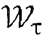 , A_{τ}) is the forward reach set of the uncontrolled system (15) under uncertainty over the period from *τ = t, t +* 1, ... ,*k.*

When a plurality of (robust/controllable) controllable sets, each represented as a constrained zonotope, must be enforced on the nominal trajectory, then we will have to invoke mixed-integer linear programming to reflect the disjunctive constraints. For example, consider *N_{D}* constrained zonotopes 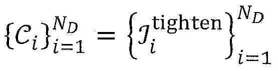 where 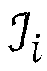 is the constrained zonotope that corresponds to post-failure safety constraints that must enforced at some time *k* ≥ *t* in the design of the nominal trajectory at time *t.* Using *N_{D}* auxiliary continuous variables ${ξ}_{i} ∈ {ℝ}^{{N}_{{I}_{i}}}$ and *N_{D}* auxiliary binary variables *δᵢ* ∈ {0,1}, and for any sufficiently large M > 0, the following set of mixed-integer linear constraints is equivalent to the constraint the nominal state at (predicted) time k, given the current time t 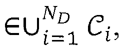 $∀ i ∈ i = 1 , … {N}_{D} , {\left‖{G}_{C , i}{ξ}_{i}+{c}_{C , i}-{x}_{k \left|t\right.}\right‖}_{∞} \leq M \left(1-{δ}_{i}\right)$ (26) $∀ i ∈ i = 1 , … {N}_{D} , {A}_{C , i} {ξ}_{i} = {b}_{C , i} , {\left‖{ξ}_{i}\right‖}_{∞} \leq 1 ,$ (27) ${\sum }_{i = 1}^{{N}_{D}} {δ}_{i} \geq 1 .$ (28)

Such constraints can be easily solve by off-the-shelf solvers like GUROBI.

Chance constraint enforcement of constrained zonotopic inner-approximations of the stochastic controllable set can be accomplished by enforcing that the mean of the perturbed state lies inside the Pontryagin difference of the constrained zonotopic inner-approximations of the stochastic controllable set and a convex and compact set that has the necessary probability mass that is symmetric about some point. This corresponds to the well-known ellipsoidal approximation of chance constraints.

Similarly to (26)-(28), one can also use mixed-integer linear constraints to enforce containment in plurality of stochastic controllable sets.

FIG. 9 is a schematic diagram illustrating some components used for implementing the methods and the systems of the present disclosure. For example, a computer 900 can be adapted for controlling the motion of the spacecraft 101 in the multi-object celestial system while avoiding the unauthorized entry into the keep-away zone 107 during the normal and the abnormal operation of the spacecraft. A CPU or processor(s) 901 can be connected via a bus system 903 to a memory 905, input/output devices 907 and a communication interface 909. Also, connected to the bus system 903 can be a storage device 911, a control interface 913, display interface 915, and an external interface 917.

The external interface 917 can be connected to an expansion memory 919, vehicle parameters 921 (i.e., spacecraft specifications, thruster specifications, size, weight, etc.), initial orbit data 923 (i.e., time, date, parameters including altitude, inclination, eccentricity, etc.), target orbit data 925, and other orbit data 927 (i.e., unique orbit data). The bus system 903 can also connect a control interface 929, an output interface 931, a receiver 933 and a transmitter 935. Further, the bus system 903 can connect a GPS receiver module 937 to a GPS 939. The computer 900 includes an orbit maintenance module 941. The orbit maintenance module 941 may output thruster commands 943. The orbit maintenance module 941 includes a transfer orbit generator 945, a feedback gain module 947, a feedback controller 949, and a thruster command generator 951.

The computer 900 can be a server or a desktop, a laptop, a mobile or other computer device or system with one or more processors 901. The processor 901 may be a central processing unit adapted for accessing code in the form of the transfer orbit generator 945 in the memory 905 or storage device 911 of the computer 900 (or in an expansion memory 919). Contemplated are external storage devices if further required depending upon the specific design and aspect of an intended hardware and goal implementation, according aspects related to the systems and the methods of the present disclosure. For example, the computer 900 can be used to implement the steps of the systems and methods, where the memory 905, and/or storage device 911 can store data.

The stored data in the memory 905 can include executable modules, vehicle data and historical space data. For example, the vehicle data can include specifications of the spacecraft, dimensions, weight, performance data under varied conditions including gravitation forces, and other perturbations, i.e., complex motion(s) of a massive body subject to forces other than the gravitational attraction of a single other massive body in space.

Further, the vehicle data can include data related to aspects related to vehicle dynamics associated with one or more of the multi-variables, i.e., (1) unusual orbital characteristics of a celestial body, i.e. a natural object which is located outside of Earth's atmosphere, such as the Moon, the Sun, an asteroid, planet, or star; (2) unusual orbital motion the celestial body; (3) celestial body's unusually close orbit around another celestial body; and (4) other known perturbations. The space data can include data related to celestial body(s) system, past missions to celestial body(s) and any other data related to space, the spacecraft and planning orbital designs to other celestial bodies in the universe. For example, the space data can include data about the moons of celestial body(s), such as characteristics of celestial body(s) that can be taken into consideration in developing orbital designs from an initial celestial body(s) orbit to a similar target celestial body(s) orbit.

The processor 901 of the computer 900 may be two or more processors depending upon the specific application. For example, some steps may require a separate processor to ensure a specific processing time or processing speed associated with the systems and methods of the present disclosure. The receiver 933 or input interface can receive space data that may be up-to-date space data, obtained from either an Earth Mission Control Center or sensors associated with the spacecraft, or some other location, after the stored historical space data stored in the memory 905. The receiver 933 and the transmitter 935 can provide a wireless venue for receiving and sending data to, for example, an Earth Mission Control Center, or some other destination. The GPS receiver module 937 connected to the GPS 939 can be used for navigation related aspects. The computer 900 may further include external devices, control interfaces, displays, sensors, machines, etc., that are contemplated for uses related to the systems and methods of the present disclosure.

FIG. 10 is a schematic illustrating by non-limiting example a computing apparatus for implementing the methods and the systems of the present disclosure. The computing device 1000 can include a power source 1001, a processor 1003, a memory 1005, a storage device 1007, all connected to a bus 1009. Further, a high-speed interface 1011, a low-speed interface 1013, high-speed expansion ports 1015 and low speed connection ports 1017, can be connected to the bus 1009. In addition, a low-speed expansion port 1019 is in connection with the bus 1009. Further, an input interface 1021 can be connected via the bus 1009 to an external receiver 1023 and an output interface 1025. A receiver 1027 can be connected to an external transmitter 1029 and a transmitter 1031 via the bus 1009. Also connected to the bus 1009 can be an external memory 1033, external sensors 1035, machine(s) 1037, and an environment 1039. Further, one or more external input/output devices 1041 can be connected to the bus 1009. A network interface controller (NIC) 1043 can be adapted to connect through the bus 1009 to a network 1045, wherein data or other data, among other things, can be rendered on a third-party display device, third party imaging device, and/or third-party printing device outside of the computer device 1000.

The memory 1005 can store instructions that are executable by the computer device 1000, historical data, and any data that can be utilized by the methods and systems of the present disclosure. The memory 1005 can include random access memory (RAM), read only memory (ROM), flash memory, or any other suitable memory systems. The memory 1005 can be a volatile memory unit or units, and/or a non-volatile memory unit or units. The memory 1005 may also be another form of computer-readable medium, such as a magnetic or optical disk.

The storage device 1007 can be adapted to store supplementary data and/or software modules used by the computer device 1000. For example, the storage device 1007 can store historical data and other related data as mentioned above regarding the present disclosure. Additionally, or alternatively, the storage device 1007 can store historical data like data as mentioned above regarding the present disclosure. The storage device 1007 can include a hard drive, an optical drive, a thumb-drive, an array of drives, or any combinations thereof. Further, the storage device 1007 can contain a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, the processor 1003), perform one or more methods, such as those described above.

The computing device 1000 can be linked through the bus 1009, optionally, to a display interface or user Interface (HMI) 1047 adapted to connect the computing device 1000 to a display device 1049 and a keyboard 1051, wherein the display device 1049 can include a computer monitor, camera, television, projector, or mobile device, among others. In some implementations, the computer device 1000 may include a printer interface to connect to a printing device, wherein the printing device can include a liquid inkjet printer, solid ink printer, large-scale commercial printer, thermal printer, UV printer, or dye-sublimation printer, among others.

The high-speed interface 1011 manages bandwidth-intensive operations for the computing device 1000, while the low-speed interface 1013 manages lower bandwidth-intensive operations. Such allocation of functions is an example only. In some implementations, the high-speed interface 1011 can be coupled to the memory 1005, the user interface (HMI) 1047, and to the keyboard 1051 and the display 1049 (e.g., through a graphics processor or accelerator), and to the high-speed expansion ports 1015, which may accept various expansion cards via the bus 1009. In an implementation, the low-speed interface 1013 is coupled to the storage device 1007 and the low-speed expansion ports 1017, via the bus 1009. The low-speed expansion port 1017, which may include various communication ports (e.g., USB, Bluetooth, Ethernet, wireless Ethernet) may be coupled to one or more input/output devices 1041. The computing device 1000 may be connected to a server 1053 and a rack server 1055. The computing device 1000 may be implemented in several different forms. For example, the computing device 1000 may be implemented as part of the rack server 1055.

### Exemplary embodiments: robust model predictive control

FIG. 11A shows a schematic of vehicle 1120a including the controller 1100, according to some embodiments of the present disclosure. As used herein, the vehicle 1120a can be any type of wheeled vehicle, such as a passenger car, bus, or rover. Also, the vehicle 1120a can be an autonomous or semi-autonomous vehicle. For example, some embodiments control the motion of the vehicle 1120a. Examples of the motion include the lateral motion of the vehicle controlled by a steering system 1103 of vehicle 1120a. In one embodiment, the steering system 1103 is controlled by the controller 1100. Additionally, or alternatively, the steering system 1103 can be controlled by a driver of the vehicle 1120a.

The vehicle can also include an engine 1106, which can be controlled by the controller 1100 or by other components of the vehicle 1120a. Vehicle 1002a can also include one or more sensors 1104 to sense the surrounding environment. Examples of the sensors 1104 include distance range finders, radars, lidars, and cameras, either mounted on the vehicle or on a roadside unit (RSU). The Vehicle 1120a can also include one or more sensors 1105 to sense its current motion quantities and internal status. Examples of the sensors 1105 include global positioning system (GPS), accelerometers, inertial measurement units, gyroscopes, shaft rotational sensors, torque sensors, deflection sensors, pressure sensors, and flow sensors. The sensors provide information to the controller 1100. The vehicle can be equipped with a transceiver 1107 enabling communication capabilities of the controller 1100 through wired or wireless communication channels.

FIG. 11B shows a schematic of interaction between the controller 1100 and controller 1120 of vehicle 1120a, according to some embodiments of the present disclosure. For example, in some embodiments, the controllers 1120 of the vehicle 1120a are a steering controller 1125 and a brake/throttle controller 1130 that control the rotation and acceleration of the vehicle 1120a. In such a case, the controller 1100 outputs control inputs to the controllers 1125 and 1130 to control the state of the vehicle 1120a. Controllers 1120 can also include high-level controllers, e.g., a lane-keeping assist controller 1135 that further processes the control inputs of the controller 1100. In both cases, controller 1120 uses the outputs of controller 1100 to control at least one actuator of the vehicle, such as the steering wheel and/or the brakes of vehicle 1120a, in order to control the motion of vehicle 1120a.

In various embodiments, the controller 1100 is a feedback controller configured for model predictive control that determines the robust controllable set for maintaining the state of the vehicle, starting from the current state of the system, within a prediction horizon defining a number of future control steps. Additionally or alternatively, the controller 1100 can be arranged on a drone and/or a remote server controlling the drone, as illustrated in FIG. 11C.

FIG. 11C shows a schematic of an embodiment 1100c where an unmanned aerial vehicle (UAV) is controlled using the controller 1100 implemented on a server 1110c, according to some embodiments of the present disclosure. The server 1110c executes the steps of the methods FIG. 1A described earlier. A vehicle 1120c equivalent is a UAV. The vehicle 1120c may transmit data 1130c of its own state and/or environmental data back to the server 1110c. In some embodiments, a motion plan 1155c based on joint tracking of vehicle 1120c and a map state as generated by controller 1100 is updated continuously as additional information is gathered on the disturbance and the environment. The information on the disturbance and the environment may be gathered by the vehicle 1120c itself, or by any third-party sensors 1131c, 1132c, or 1133c. The sensors 1131c, 1132c, and 1133c may be physical sensors, such as LiDAR measuring wind speeds, or non-physical sensors, such as meteorological forecasts of the wind speeds or ocean currents, depending on the vehicle 1120c considered.

The following description provides exemplary embodiments only and is not intended to limit the scope, applicability, or configuration of the disclosure.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments.

## Claims

1. A feedback controller for controlling an operation of a mechanical system subject to uncertainty on a state of the operation of the system, the feedback controller comprising: at least one processor; and a non-transitory memory having instructions stored thereon that, when executed by the at least one processor, cause the feedback controller to:
collect a feedback signal indicative of a current state of the operation of the system subject to constraints and current uncertainty on the current state of the operation of the system, wherein
the current uncertainty lies in a symmetric bounded set and includes one or a combination of uncertainty on dynamics of the system, uncertainty on a state of the system, uncertainty on control commands to the system, and uncertainty on constraints on the state of the operation of the system;
determine a robust controllable set by employing closed-form expressions on a constrained zonotope defining the constraints on the state of the operation of the system and an affine transformation of the symmetric bounded set inclosing the current uncertainty into space of the constrained zonotope, wherein the closed-form expressions include a closed-form approximation of a Pontryagin difference between the constrained zonotope and the affine transformation of the symmetric bounded set, wherein the affine transformation is **characterized by** a matrix and a vector that together alter dimension of the symmetric bounded set, wherein the feedback controller is configured for fault-tolerant control by tightening the constraints represented by the constrained zonotope and maintaining a nominal trajectory of the operation of the mechanical system within the robust controllable set approximated using the constrained zonotope,
herein, when state of the system is within the determined robust controllable set, there exists a control command maintaining the state of the system within the robust controllable set, the control command is produced based on a nominal control law of the system; and
submit the control command to an actuator of the system causing a change in the state of the operation of the system.

2. The feedback controller of claim 1, wherein the closed-form approximation of the Pontryagin difference is an inner approximation determined by scaling the affine transformation and equality constraints describing the constrained zonotope as a constrained zonotopic minuend based on characteristics of a convex, compact, and symmetric subtrahend.

3. The feedback controller of claim 2, wherein the scaling is determined by the solution of a collection of linear equations determined by the affine transformation, the equality constraints describing the constrained zonotopic minuend, and the characteristics of the convex, compact, and symmetric subtrahend.

4. The feedback controller of claim 2, wherein the symmetric bounded set is transformed into the space of the constrained zonotope using higher-dimensional affine transformation.

5. The feedback controller of claim 2, wherein the closed-form approximation of the Pontryagin difference is obtained by computing the Pontryagin difference between a polyhedral outer approximation of the constrained zonotopic minuend and the symmetric subtrahend,
optionally wherein the polyhedral outer approximation of the constrained zonotopic minuend is determined by a collection of halfspaces determined by a closed-form collection of feasible solutions to a Lagrangian dual of an optimization problem describing a check of containment of a trajectory of the operation of the mechanical system in the constrained zonotope.

6. The feedback controller of claim 1, wherein a containment of the nominal trajectory in a constrained zonotopic inner-approximation of the robust controllable set is given by tightening the constraints based on nominal dynamics, nominal uncertainty model, and the constrained zonotope, and wherein the nominal dynamics and the uncertainty model represent characteristics of the system under nominal operation,
optionally wherein tightening the constraints is further based on post-failure dynamics, post-failure safety constraints, and a post-failure uncertainty model, wherein the post-failure safety constraints encode constraints that satisfy post-failure desirable behavior under the post-failure dynamics and the post-failure uncertainty model, wherein the post-failure uncertainty model uses reachability to identify the constraints that satisfy the post-failure desirable behavior, and wherein satisfying the constraints that satisfy post-failure desirable behavior includes guaranteeing post-failure safety of avoiding a target under limited actuation of the system.

7. The feedback controller of claim 1, wherein the robust controllable set is determined from a stochastic controllable set, by enforcing that a mean of the state lies inside the Pontryagin difference between a constrained zonotope inner approximation of the stochastic controllable set and a convex, compact, and symmetric set based on a nominal uncertainty model that contains a given probability mass, and wherein the stochastic controllable set accommodates the uncertainty and provides satisfaction of the constraints up to a user-specified likelihood.

8. The feedback controller of claim 1, wherein the mechanical system is a spacecraft, wherein the feedback controller is a fault-tolerant controller configured to perform an abort control law corresponding to the robust controllable set that steers the spacecraft away from a keep-away set with a likelihood in an event of an abnormal operation of the spacecraft, and wherein the robust controllable set and the corresponding abort control law are determined jointly and interdependently using a single computation of the robust controllable set.

9. A spacecraft for moving in a multi-object celestial system, comprising:
the feedback controller of claim 1;
a set of thrusters configured to change a state of the spacecraft according to of the control commands produced by the feedback controller of claim 1;
a set of sensors configured to produce measurements indicative of the state of the spacecraft; and
a circuitry configured to detect an abnormal operation of the spacecraft, wherein the abnormal operation includes one or a combination of a failure to receive an authorization to enter a keep-away zone and a failure of at least one component of the spacecraft.

10. The spacecraft of claim 9, wherein the feedback controller is configured to execute, during a normal operation of the spacecraft, a nominal control law subject to constraints on maintaining a state of the spacecraft within a union of a plurality of control invariant sets of values of the state of the spacecraft that partially or completely enclose the keep-away zone, wherein the normal operation includes moving towards a target in the keep-away zone, wherein the state of the spacecraft includes a location of the spacecraft and at least one or a combination of a velocity and an acceleration of the spacecraft, wherein each of the plurality of control invariant sets is determined using constrained zonotopes computational geometry such that when the state of the spacecraft is within a control invariant set there is a control command produced by the nominal control law that maintains the state of the spacecraft within the control invariant set despite internal and external forces acting on the spacecraft; and
execute, upon detecting the abnormal operation of the spacecraft, an abort control law associated with the control invariant set including a current state of the spacecraft, wherein at least some different abort control laws are associated with at least some different control invariant sets, and wherein the abort control law is jointly and interdependently determined for the corresponding control invariant set to produce abort control commands moving the spacecraft while avoiding the keep-away zone for any state within the corresponding control invariant set, wherein the nominal control law is designed using a model predictive controller (MPC), and wherein the MPC is based on an iterative, finite horizon optimization of a model of dynamics of the spacecraft, a set of objectives of motion of the spacecraft, and constraints on spacecraft propulsion system and motion.

11. The spacecraft of claim 10, wherein the union of the plurality of control invariant sets corresponds to an inner approximate of a stochastic controllable set, and wherein the inner approximate guarantees control invariance with the first likelihood of the unbounded stochastic uncertainty, in an event of the abnormal operation; or
each of the control invariant sets is a robust control invariant set determined for the nominal control law with a bounded non-stochastic uncertainty corresponding to the first likelihood on the unbounded stochastic uncertainty.

12. The feedback controller of claim 1, wherein the system is a vehicle.

13. A method for feedback control of an operation of a mechanical system subject to uncertainty on a state of the operation of the system, wherein the method uses a processor coupled with stored instructions implementing the method, wherein the instructions, when executed by the processor carry out steps of the method, comprising:
collecting (101) a feedback signal indicative of a current state of the operation of the system subject to constraints and current uncertainty on the current state of the operation of the system, wherein the current uncertainty lies in a symmetric bounded set and includes one or a combination of uncertainty on dynamics of the system, uncertainty on a state of the system, uncertainty on control commands to the system, and uncertainty on constraints on the state of the operation of the system;
determining (102) a robust controllable set by employing closed-form expressions on a constrained zonotope defining the constraints on the state of the operation of the system and
an affine transformation of the symmetric bounded set inclosing the current uncertainty into space of the constrained zonotope, wherein the closed-form expressions include a closed-form approximation of a Pontryagin difference between the constrained zonotope and the affine transformation of the symmetric bounded set, and wherein the constraints represented by the constrained zonotope are tightened and a nominal trajectory of the operation of the mechanical system within the robust controllable set approximated using the constrained zonotope is maintained for fault-tolerant control;
wherein the affine transformation is **characterized by** a matrix and a vector that together alter dimension of the symmetric bounded set, wherein the feedback controller is configured for fault-tolerant control by tightening the constraints represented by the constrained zonotope and maintaining a nominal trajectory of the operation of the mechanical system within the robust controllable set approximated using the constrained zonotope,
wherein, when state of the system is within the determined robust controllable set, there exists a control command maintaining the state of the system within the robust controllable set, the control command is produced based on a nominal control law of the system,
wherein the method further comprises: submitting (103) the control command to an actuator of the system causing a change in the state of the operation of the system.

14. The method of claim 13, wherein the closed-form approximation of the Pontryagin difference is an inner approximation determined by scaling the affine transformation and equality constraints describing the constrained zonotope as a constrained zonotopic minuend based on characteristics of a convex, compact, and symmetric subtrahend.

15. The method of claim 14, wherein the scaling is determined by the solution of a collection of linear equations determined by the affine transformation, the equality constraints describing the constrained zonotopic minuend, and the characteristics of the convex, compact, and symmetric subtrahend.

## Patentansprüche

1. Rückmeldungssteuerung zum Steuern eines Betriebs eines mechanischen Systems, das einer Unsicherheit hinsichtlich eines Zustands des Betriebs des Systems unterliegt, wobei die Rückmeldungssteuerung umfasst: mindestens einen Prozessor; und einen nichtflüchtigen Speicher mit darauf gespeicherten Anweisungen, die, wenn sie von dem zumindest einen Prozessor ausgeführt werden, die Rückmeldungssteurung veranlassen zum:
Einsammeln eines Rückmeldungssignals, das einen aktuellen Zustand des Betriebs des Systems angibt, welches Einschränkungen und einer aktuellen Unsicherheit bezüglich des aktuellen Zustands des Betriebs des Systems unterliegt, wobei die aktuelle Unsicherheit in einer symmetrischen, begrenzten Menge liegt und eine oder eine Kombination aus Unsicherheit bezüglich der Dynamik des Systems, Unsicherheit bezüglich eines Zustands des Systems, Unsicherheit bezüglich der Steuerbefehle an das System und Unsicherheit bezüglich der Einschränkungen des Zustands des Betriebs des Systems umfasst;
Bestimmen einer robusten steuerbaren Menge durch Einsatz von Ausdrücken in geschlossener Form auf einem eingeschränkten Zonotop, das die Einschränkungen des Zustands des Betriebs des Systems definiert, und einer affinen Transformation der symmetrischen, beschränkten Menge, die die aktuelle Unsicherheit in den Raum des eingeschränkten Zonotops einschließt, wobei die Ausdrücke in geschlossener Form eine Appriximation in geschlossener Form einer Pontryagin-Differenz zwischen dem eingeschränkten Zonotop und der affinen Transformation der symmetrischen, beschränkten Menge umfassen, wobei die affine Transformation durch eine Matrix und einen Vektor charakterisiert ist, die gemeinsam die Dimension der symmetrischen, beschränkten Menge verändern, wobei die Rückmeldungssteuerung für fehlertolerantes Steuern eingerichtet ist, indem die durch das eingeschränkte Zonotop dargestellten Einschränkungen verschärft werden und eine Trajektorie des Betriebs des mechanischen Systems innerhalb der robusten steuerbaren Menge aufrechterhalten wird, die unter Verwendung des eingeschränkten Zonotops approximiert wird,
wobei hier, wenn sich ein Zustand des Systems innerhalb der bestimmten robusten steuerbaren Menge befindet, ein Steuerbefehl existiert, der den Zustand des Systems innerhalb der robusten steuerbaren Menge aufrechterhält, der Steuerbefehl auf der Grundlage eines nominalen Steuergesetzes des Systems erzeugt wird;
und Übermitteln des Steuerbefehls an einen Aktuator des Systems, wodurch sich der Zustand des Betriebs des Systems ändert.

2. Rückmeldungssteuerung nach Anspruch 1, wobei die Approximation in geschlossener Form der Pontryagin-Differenz eine innere Approximation ist, die durch Skalierung der affinen Transformation und der Gleichheitseinschränkungen bestimmt wird, welche das eingeschränkte Zonotop als eingeschränkten zonotopischen Minuenden auf der Grundlage der Eigenschaften eines konvexen, kompakten und symmetrischen Subtrahenden beschreiben.

3. Rückmeldungssteuerung nach Anspruch 2, wobei die Skalierung durch die Lösung einer Sammlung linearer Gleichungen bestimmt wird, die durch die affine Transformation, die Gleichheitseinschränkungen, die den eingeschränkten zonotopischen Minuenden beschreiben, und die Eigenschaften des konvexen, kompakten und symmetrischen Subtrahenden bestimmt werden.

4. Rückmeldungssteuerung nach Anspruch 2, wobei die symmetrische, begrenzte Menge unter Verwendung einer affinen Transformation höherer Dimension in den Raum des eingeschränkten Zonotops transformiert wird.

5. Rückmeldungssteuerung nach Anspruch 2, wobei die Approximation geschlossener Form der Pontryagin-Differenz durch Berechnung der Pontryagin-Differenz zwischen einer polyedrischen äußeren Approximation des zonotopischen Minuenden mit Nebenbedingungen und dem symmetrischen Subtrahenden erhalten wird,
wobei optional die polyedrische äußere Approximation des eingeschränkten zonotopischen Minuenden durch eine Sammlung von Halbräumen bestimmt wird, die durch eine Sammlung geschlossener Form möglicher Lösungen für ein Lagrange-Dual eines Optimierungsproblems bestimmt werden, das eine Überprüfung einer Eindämmung einer Trajektorie des Betriebs des mechanischen Systems im eingeschränkten Zonotop beschreibt.

6. Rückmeldungssteuerung nach Anspruch 1, wobei eine Einschränkung der nominalen Trajektorie in einer eingeschränkten zonotopischen inneren Approximation der robusten steuerbaren Menge dadurch gegeben ist, dass die Einschränkungen auf der Grundlage nominaler Dynamiken, eines nominalen Unsicherheitsmodells und des eingeschränkten Zonotops verschärft werden, und wobei die nominalen Dynamiken und das Unsicherheitsmodell Eigenschaften des Systems im nominalen Betrieb darstellen,
wobei die Verschärfung der Einschränkungen optional zusätzlich auf Dynamiken nach einem Fehler, den Sicherheitseinschränkungen nach einem Fehler und einem Unsicherheitsmodell nach einem Fehler basiert, wobei die Sicherheitseinschränkungen nach einem Fehler Einschränkungen kodieren, die unter den Dynamiken nach einem Fehler und dem Unsicherheitsmodell nach einem Fehler ein gewünschtes Verhalten nach einem Fehler gewährleisten, wobei das Unsicherheitsmodell nach einem Fehler die Erreichbarkeit nutzt, um die Einschränkungen zu identifizieren, die das gewünschte Verhalten nach einem Fehler erfüllen, und wobei die Erfüllung der Einschränkungen, die ein gewünschtes Verhalten nach einem Fehler erfüllen, die Gewährleistung der Sicherheit nach einem Fehler umfasst, indem bei beschränkter Betätigung des Systems ein Ziel gemieden wird.

7. Rückmeldungssteuerung nach Anspruch 1, wobei die robuste steuerbare Menge aus einer stochastischen steuerbaren Menge bestimmt wird, indem forciert wird, dass ein Mittelwert des Zustands innerhalb der Pontryagin-Differenz zwischen einer eingeschränkten zonotopischen inneren Approximation der stochastischen steuerbaren Menge und einer konvexen, kompakten und symmetrischen Menge liegt, die auf einem nominalen Unsicherheitsmodell basiert, das eine gegebene Wahrscheinlichkeitsmasse enthält, und wobei die stochastisch steuerbare Menge die Unsicherheit berücksichtigt und die Erfüllung der Einschränkungen bis zu einer benutzerspezifizierten Wahrscheinlichkeit bereitstellt.

8. Rückmeldungssteuerung nach Anspruch 1, wobei das mechanische System ein Raumfahrzeug ist, wobei die Rückmeldungssteuerung eine fehlertolerante Steuerung ist, die eingerichtet ist, im Falle eines anormalen Betriebs des Raumfahrzeugs ein Abbruch-Steuergesetz entsprechend der robusten steuerbaren Menge durchzuführen, die das Raumfahrzeug mit einer bestimmten Wahrscheinlichkeit von einer Sperrmenge wegsteuert, wobei die robuste steuerbare Menge und das entsprechende Abbruch-Steuergesetz gemeinsam und in gegenseitiger Abhängigkeit unter Verwendung einer einzigen Berechnung der robusten steuerbaren Menge bestimmt werden.

9. Raumfahrzeug zur Fortbewegung in einem Himmelssystem mit mehreren Objekten, umfassend:
die Rückmeldungssteuerung nach Anspruch 1;
eine Menge von Triebwerken, die eingerichtet sind, einen Zustand des Raumfahrzeugs gemäß den von der Rückmeldungssteuerung nach Anspruch 1 erzeugten Steuerbefehlen zu ändern;
eine Menge von Sensoren, die eingerichtet sind, Messungen zu erstellen, die den Zustand des Raumfahrzeugs angeben; und
eine Schaltung, die eingerichtet ist, einen anormalen Betrieb des Raumfahrzeugs zu erfassen, wobei der anomale Betrieb eines oder eine Kombination umfasst aus einem Fehler des Empfangens einer Genehmigung zum Betreten einer Sperrzone oder einem Fehler mindestens einer Komponente des Raumfahrzeugs.

10. Raumfahrzeug nach Anspruch 9, wobei die Rückmeldungssteuerung eingerichtet ist zum Ausführen, während eines normalen Betriebs des Raumfahrzeugs, eines nominalen Steuergesetzes, das den Einschränkungen unterliegt, einen Zustand des Raumfahrzeugs innerhalb einer Vereinigung einer Vielzahl von steuerinvarianten Mengen von Werten des Zustands des Raumfahrzeugs aufrechtzuerhalten, die die Sperrzone teilweise oder vollständig umschließen, wobei der normale Betrieb die Fortbewegung in Richtung eines Ziels in der Sperrzone umfasst, wobei der Zustand des Raumfahrzeugs eine Position des Raumfahrzeugs und mindestens eine oder eine Kombination aus einer Geschwindigkeit und einer Beschleunigung des Raumfahrzeugs umfasst, wobei jede der Vielzahl von steuerinvarianten Mengen unter Verwendung von rechnergestützter Geometrie der eingeschränkten Zonotope so bestimmt wird, dass, wenn sich der Zustand des Raumfahrzeugs innerhalb einer steuerinvarianten Menge befindet, durch das nominale Steuergesetz ein Steuerbefehl erzeugt wird, der den Zustand des Raumfahrzeugs trotz der auf das Raumfahrzeug einwirkenden inneren und äußeren Kräfte innerhalb der steuerinvarianten Menge aufrechterhält; und
Ausführen, bei Erfassen des anormalen Betriebs des Raumfahrzeugs, eines Abbruch-Steuergesetzes, das der steuerinvarianten Menge zugeordnet ist, die einen aktuellen Zustand des Raumfahrzeugs umfasst, wobei zumindest einigen verschiedenen steuerinvarianten Mengen zumindest einige unterschiedliche Abbruch-Steuergesetze zugeordnet sind, und wobei das Abbruch-Steuergesetz gemeinsam und in gegenseitiger Abhängigkeit für die entsprechende steuerinvariante Menge bestimmt wird, um Abbruch-Steuerbefehle zu erzeugen, die das Raumfahrzeug so bewegen, dass die Sperrzone für jeden Zustand innerhalb der entsprechenden steuerinvarianten Menge vermieden wird, wobei das nominale Steuergesetz unter Verwendung eines modellprädiktiven Controllers (MPC) konstruiert ist, und wobei der MPC auf einer iterativen Optimierung mit endlichem Horizont eines Modells von Dynamiken des Raumfahrzeugs, einer Menge von Bewegungszielen des Raumfahrzeugs und Einschränkungen hinsichtlich des Antriebssystems und der Bewegung des Raumfahrzeugs basiert.

11. Raumfahrzeug nach Anspruch 10, wobei die Vereinigung der Vielzahl von steuerinvarianten Mengen einer inneren Approximation einer stochastisch steuerbaren Menge entspricht und wobei die innere Approximation im Falle eines anomalen Betriebs eine Steuerinvarianz mit der ersten Wahrscheinlichkeit der unbegrenzten stochastischen Unsicherheit gewährleistet; oder
jede der steuerinvarianten Mengen eine robuste steuerinvariante Menge ist, die für das nominale Steuergesetz mit einer begrenzten nichtstochastischen Unsicherheit bestimmt wird, die der ersten Wahrscheinlichkeit bezüglich der unbegrenzten stochastischen Unsicherheit entspricht.

12. Rückmeldungssteuerung nach Anspruch 1, wobei das System ein Fahrzeug ist.

13. Verfahren zur Rückmeldungssteuerung eines Betriebs eines mechanischen Systems, das einer Unsicherheit hinsichtlich eines Zustands des Betriebs des Systems unterliegt, wobei das Verfahren einen Prozessor nutzt, der mit gespeicherten Anweisungen gekoppelt ist, die das Verfahren implementieren, wobei die Anweisungen, wenn sie durch den Prozessor ausgeführt werden, Schritte des Verfahrens vornehmen, umfassend:
Einammeln (101) eines Rückmeldungssignals, das einen aktuellen Zustand des Betriebs des Systems angibt, welches Einschränkungen und einer aktuellen Unsicherheit bezüglich des aktuellen Zustands des Betriebs des Systems unterliegt, wobei die aktuelle Unsicherheit in einer symmetrischen, begrenzten Menge liegt und eine oder eine Kombination aus Unsicherheit bezüglich der Dynamik des Systems, Unsicherheit bezüglich eines Zustands des Systems, Unsicherheit bezüglich der Steuerbefehle an das System und Unsicherheit bezüglich der Einschränkungen des Zustands des Betriebs des Systems umfasst;
Bestimmen (102) einer robusten steuerbaren Menge durch Einsatz von Ausdrücken in geschlossener Form auf einem eingeschränkten Zonotop, das die Einschränkungen des Zustands des Betriebs des Systems definiert, und einer affinen Transformation der symmetrischen, beschränkten Menge, die die aktuelle Unsicherheit in den Raum des eingeschränkten Zonotops einschließt, wobei die Ausdrücke in geschlossener Form eine Appriximation in geschlossener Form einer Pontryagin-Differenz zwischen dem eingeschränkten Zonotop und der affinen Transformation der symmetrischen, beschränkten Menge umfassen, und wobei die durch das eingeschränkte Zonotop dargestellten Einschränkungen verschärft werden und eine nominale Trajektorie des Betriebs des mechanischen Systems innerhalb der robusten steuerbaren Menge, die unter Verwendung des eingeschränkten Zonotops approximiert wird, für eine fehlertolerante Steuerung beibehalten wird;
wobei die affine Transformation durch eine Matrix und einen Vektor charakterisiert ist, die gemeinsam die Dimension der symmetrischen, beschränkten Menge verändern, wobei die Rückmeldungssteuerung für fehlertolerantes Steuern eingerichtet ist, indem die durch das eingeschränkte Zonotop dargestellten Einschränkungen verschärft werden und eine Trajektorie des Betriebs des mechanischen Systems innerhalb der robusten steuerbaren Menge aufrechterhalten wird, die unter Verwendung des eingeschränkten Zonotops approximiert wird,
wobei, wenn sich der Zustand des Systems innerhalb der bestimmten robusten steuerbaren Menge befindet, ein Steuerbefehl existiert, der den Zustand des Systems innerhalb der robusten steuerbaren Menge aufrechterhält, der Steuerbefehl auf der Grundlage eines nominalen Steuergesetzes des Systems erzeugt wird, wobei das Verfahren ferner umfasst: Übermitteln (103) des Steuerbefehls an einen Aktuator des Systems, wodurch sich der Zustand des Betriebs des Systems ändert.

14. Verfahren nach Anspruch 13, wobei die Approximation in geschlossener Form der Pontryagin-Differenz eine innere Approximation ist, die durch Skalierung der affinen Transformation und der Gleichheitseinschränkungen bestimmt wird, welche das eingeschränkte Zonotop als eingeschränkten zonotopischen Minuenden auf der Grundlage der Eigenschaften eines konvexen, kompakten und symmetrischen Subtrahenden beschreiben.

15. Verfahren nach Anspruch 14, wobei die Skalierung durch die Lösung einer Sammlung linearer Gleichungen bestimmt wird, die durch die affine Transformation, die Gleichheitseinschränkungen, die den eingeschränkten zonotopischen Minuenden beschreiben, und die Eigenschaften des konvexen, kompakten und symmetrischen Subtrahenden bestimmt werden.

## Revendications

1. Un régulateur en retour pour commander une opération d'un système mécanique soumise à une incertitude sur un état de l'opération du système, le régulateur en retour comprenant : au moins un processeur ; et une mémoire non transitoire sur laquelle sont stockées des instructions qui, lorsqu'elles sont exécutées par l'au moins un processeur, amènent le régulateur en retour à :
recueillir un signal de retour indicatif d'un état actuel de l'opération du système soumis à des contraintes et une incertitude actuelle sur l'état actuel de l'opération du système, dans laquelle l'incertitude actuelle se trouve dans un ensemble borné symétrique et inclut un ou une combinaison d'incertitude sur la dynamique du système, incertitude sur un état du système, incertitude sur des ordres de commande au système, et incertitude sur des contraintes sur l'état de l'opération du système ;
déterminer un ensemble robustement contrôlable en employant des expressions sous forme fermée sur un zonotope contraint définissant les contraintes sur l'état de l'opération du système et une transformation affine de l'ensemble borné symétrique enfermant l'incertitude actuelle dans l'espace du zonotope contraint, dans lequel les expressions sous forme fermée incluent une approximation sous forme fermée d'une différence de Pontryagin entre le zonotope contraint et la transformation affine de l'ensemble borné symétrique, dans lequel la transformation affine est **caractérisée par** une matrice et un vecteur qui, ensemble, modifient la dimension de l'ensemble borné symétrique, dans lequel le régulateur en retour est configuré pour une commande tolérante aux pannes en resserrant les contraintes représentées par le zonotope contraint et en maintenant une trajectoire nominale de l'opération du système mécanique au sein de l'ensemble robustement contrôlable approximé en utilisant le zonotope contraint,
dans les présentes, lorsque l'état du système se trouve au sein de l'ensemble robustement contrôlable déterminé, il existe un ordre de commande maintenant l'état du système au sein de l'ensemble robustement contrôlable, l' ordre de commande est produit sur la base d'une loi de commande nominale du système ; et soumet l'ordre de commande à un actionneur du système provoquant un changement dans l'état de l'opération du système.

2. Le régulateur en retour selon la revendication 1, dans lequel l'approximation sous forme fermée de la différence de Pontryagin est une approximation interne déterminée en mettant à l'échelle la transformation affine et les contraintes d'égalité décrivant le zonotope contraint comme un minuende zonotopique contraint basé sur des caractéristiques d'un soustrait convexe, compact et symétrique.

3. Le régulateur en retour selon la revendication 2, dans lequel la mise à l'échelle est déterminée par la solution d'une collection d'équations linéaires déterminée par la transformation affine, les contraintes d'égalité décrivant le minuende zonotopique contraint, et les caractéristiques du soustrait convexe, compact, et symétrique.

4. Le régulateur en retour selon la revendication 2, dans lequel l'ensemble borné symétrique est transformé dans l'espace du zonotope contraint en utilisant une transformation affine de dimension supérieure.

5. Le régulateur en retour selon la revendication 2, dans lequel l'approximation sous forme fermée de la différence de Pontryagin est obtenue en calculant la différence de Pontryagin entre une approximation extérieure polyédrique du minuende zonotopique contraint et le soustrait symétrique,
facultativement dans lequel l'approximation extérieure polyédrique du minuende zonotopique contraint est déterminée par une collection de demi-espaces déterminée par une collection sous forme fermée de solutions réalisables à un dual lagrangien d'un problème d'optimisation décrivant une vérification d'inclusion d'une trajectoire de l'opération du système mécanique dans le zonotope contraint.

6. Le régulateur en retour selon la revendication 1, dans lequel une inclusion de la trajectoire nominale dans une approximation intérieure zonotopique contrainte de l'ensemble robustement contrôlable est donnée par le resserrement des contraintes sur la base de la dynamique nominale, du modèle d'incertitude nominale, et du zonotope contraint, et dans lequel la dynamique nominale et le modèle d'incertitude représentent des caractéristiques du système sous opération nominale,
facultativement dans lequel le resserrement des contraintes est en outre basé sur une dynamique post-défaillance, des contraintes de sécurité post-défaillance, et un modèle d'incertitude post-défaillance, dans lequel les contraintes de sécurité post-défaillance encodent des contraintes qui satisfont un comportement souhaitable post-défaillance sous la dynamique post-défaillance et le modèle d'incertitude post-défaillance, dans lequel le modèle d'incertitude post-défaillance utilise l'atteignabilité pour identifier les contraintes qui satisfont le comportement souhaitable post-défaillance, et dans lequel satisfaire les contraintes qui satisfont un comportement souhaitable post-défaillance comprend garantir une sécurité post-défaillance consistant à éviter une cible sous actionnement limité du système.

7. Le régulateur en retour selon la revendication 1, dans lequel l'ensemble robustement contrôlable est déterminé à partir d'un ensemble contrôlable stochastique, en imposant qu'une moyenne de l'état se trouve à l'intérieur de la différence de Pontryagin entre une approximation interne par zonotope contraint de l'ensemble contrôlable stochastique et un ensemble convexe, compact et symétrique sur la base d'un modèle d'incertitude nominal qui contient une masse de probabilité donnée, et dans lequel l'ensemble contrôlable stochastique prend en compte l'incertitude et fournit la satisfaction des contraintes jusqu'à une vraisemblance spécifiée par l'utilisateur.

8. Le régulateur en retour selon la revendication 1, dans lequel le système mécanique est un vaisseau spatial, dans lequel le régulateur en retour est un régulateur tolérant aux pannes configuré pour effectuer une loi de commande d'abandon correspondant à l'ensemble robustement contrôlable qui dirige le vaisseau spatial à l'écart d'un ensemble d'exclusion avec une vraisemblance dans l'éventualité d'une opération anormale du vaisseau spatial, et dans lequel l'ensemble robustement contrôlable et la loi de commande d'abandon correspondante sont déterminés conjointement et de manière interdépendante en utilisant un calcul unique de l'ensemble robustement contrôlable.

9. Un vaisseau spatial pour se déplacer dans un système céleste multi-objets, comprenant :
le régulateur en retour selon la revendication 1 ;
un ensemble de propulseurs configurés pour changer un état du vaisseau spatial selon des ordres de commande produits par le régulateur en retour selon la revendication 1 ;
un ensemble de capteurs configurés pour produire des mesures indicatives de l'état du vaisseau spatial ;
une circuiterie configurée pour détecter une opération anormale du vaisseau spatial, dans lequel l'anormale opération inclut un ou une combinaison d'échecs pour recevoir une autorisation pour entrer dans une zone d'exclusion et d'une défaillance d'au moins un composant du vaisseau spatial.

10. Le vaisseau spatial selon la revendication 9, dans lequel le régulateur en retour est configuré pour exécuter, pendant une opération normale du vaisseau spatial, une loi de commande nominale soumise à des contraintes sur le maintien d'un état du vaisseau spatial à l'intérieur d'une union d'une pluralité d'ensembles invariants par commande de valeurs de l'état du vaisseau spatial qui entourent partiellement ou complètement la zone d'exclusion, dans lequel l'opération normale inclut le déplacement vers une cible dans la zone d'exclusion, dans lequel l'état du vaisseau spatial inclut un emplacement du vaisseau spatial et au moins une ou une combinaison d'une vitesse et d'une accélération du vaisseau spatial, dans lequel chacun de la pluralité d'ensembles invariants par commande est déterminé en utilisant la géométrie computationnelle des zonotopes contraints de sorte que lorsque l'état du vaisseau spatial est à l'intérieur d'un ensemble invariant par commande il existe un ordre de commande produit par la loi de commande nominale qui maintient l'état du vaisseau spatial à l'intérieur de l'ensemble invariant par commande malgré des forces internes et externes agissant sur le vaisseau spatial ; et
exécuter, lors de la détection de l'opération anormale du vaisseau spatial, une loi de commande d'abandon associée à l'ensemble invariant par commande comprenant un état actuel du vaisseau spatial, dans lequel au moins certaines lois de commande d'abandon différentes sont associées à au moins certains ensembles invariants par commandes différentes, et dans lequel la loi de commande d'abandon est conjointement et interdépendamment déterminée pour l'ensemble invariant par commande correspondant pour produire des ordres de commande d'abandon déplaçant le vaisseau spatial tout en évitant la zone d'exclusion pour tout état dans l'ensemble invariant par commande correspondant, dans lequel la loi de commande nominale est conçue à l'aide d'un régulateur prédictif à modèle (MPC), et dans lequel le MPC est basé sur une optimisation itérative, à horizon fini d'un modèle de dynamique du vaisseau spatial, d'un ensemble d'objectifs de mouvement du vaisseau spatial, et de contraintes sur le système de propulsion et le mouvement du vaisseau spatial.

11. Le vaisseau spatial selon la revendication 10, dans lequel l'union de la pluralité d'ensembles invariants par commande correspond à une approximation interne d'un ensemble contrôlable stochastique, et dans lequel l'approximation interne garantit l'invariance par commande avec la première vraisemblance de l'incertitude stochastique non bornée, dans l'éventualité d'une opération anormale ; ou
chacun des ensembles invariants par commande est un ensemble invariant par commande robuste déterminé pour la loi nominale de commande avec une incertitude non stochastique bornée correspondant à la première vraisemblance sur l'incertitude stochastique non bornée.

12. Le régulateur en retour selon la revendication 1, dans lequel le système est un véhicule.

13. Un procédé de commande en retour d'une opération d'un système mécanique soumis à incertitude sur un état de l'opération du système, dans lequel le procédé utilise un processeur couplé à des instructions stockées mettant en œuvre le procédé, dans lequel les instructions, lorsqu'elles sont exécutées par le processeur, réalisent des étapes du procédé, comprenant :
la collecte (101) d'un signal de retour indicatif d'un état actuel de l'opération du système soumis à des contraintes et à une incertitude actuelle sur l'état actuel de l'opération du système, dans lequel l'incertitude actuelle se trouve dans un ensemble borné symétrique et comprend une ou une combinaison d'incertitude sur la dynamique du système, d'incertitude sur un état du système, d'incertitude sur des ordres de commande au système, et d'incertitude sur des contraintes sur l'état de l'opération du système ;
la détermination (102) d'un ensemble robustement contrôlable en employant des expressions sous forme fermée sur un zonotope contraint définissant les contraintes sur l'état de l'opération du système et une transformation affine de l'ensemble borné symétrique renfermant l'incertitude actuelle dans l'espace du zonotope contraint, dans lequel les expressions en forme fermée incluent une approximation en forme fermée d'une différence de Pontryagin entre le zonotope contraint et la transformation affine de l'ensemble borné symétrique, et dans lequel les contraintes représentées par le zonotope contraint sont resserrées et une trajectoire nominale de l'opération du système mécanique au sein de l'ensemble robustement contrôlable approximé en utilisant le zonotope contraint est maintenue pour une commande tolérante aux défaillances ;
dans lequel la transformation affine est **caractérisée par** une matrice et un vecteur qui ensemble modifient la dimension de l'ensemble borné symétrique, dans lequel le régulateur en retour est configuré pour une commande tolérante aux défaillances par le resserrement des contraintes représentées par le zonotope contraint et le maintien d'une trajectoire nominale de l'opération du système mécanique au sein du ensemble robustement contrôlable approximé en utilisant le zonotope contraint,
dans lequel, lorsque l'état du système se trouve au sein de l'ensemble robustement contrôlable déterminé, il existe un ordre de commande maintenant l'état du système au sein de l'ensemble robustement contrôlable, l' ordre de commande est produit sur la base d'une loi de commande nominale du système, dans lequel le procédé comprend en outre : la soumission (103) de l'ordre de commande à un actionneur du système provoquant un changement dans l'état de l'opération du système.

14. Le procédé selon la revendication 13, dans lequel l'approximation en forme fermée de la différence de Pontryagin est une approximation interne déterminée par mise à l'échelle de la transformation affine et des contraintes d'égalité décrivant le zonotope contraint comme un minuende zonotopique contraint sur la base de caractéristiques d'un soustrait convexe, compact et symétrique.

15. Le procédé selon la revendication 14, dans lequel la mise à l'échelle est déterminée par la solution d'une collection d'équations linéaires déterminées par la transformation affine, les contraintes d'égalité décrivant le minuende zonotopique contraint, et les caractéristiques du soustrait convexe, compact, et symétrique.
